# EUROPEAN PATENT SPECIFICATION

(11) **EP 3 096 304 B1**
(45) Date of publication and mention of the grant of the patent: **06.05.2020**
(21) Application number: 15167916.4
(22) Date of filing: 18.05.2015
(51) Int. Cl.: G08C 17/02

(54) **METHOD AND ARRANGEMENT FOR CONTROLLING APPLIANCES FROM A DISTANCE**
VERFAHREN UND ANORDNUNG ZUR STEUERUNG VON VORRICHTUNGEN AUS DER FERNE
PROCÉDÉ ET AGENCEMENT PERMETTANT DE COMMANDER DES APPAREILS À DISTANCE

(43) Date of publication of application: 23.11.2016
(73) Proprietor: Helvar Oy Ab, 02150 Espoo (FI)
(72) Inventor: Ellwood, Simon, Dartford, Kent DA2 7SY (GB)
(74) Representative: Berggren Oy, Helsinki & Oulu

(56) References cited:
- WO-A1-2013/132416
- CA-A1- 2 591 809

## Description

### FIELD OF THE INVENTION

The invention concerns the field of user interfaces used to control electronic appliances. Especially the invention concerns the task of providing a user with intuitive and easily reached controls for controlling aspects of house automation, such as controllable lighting. Aspects of the invention are applicable also to controlling other kinds of electric devices and systems.

Aspects of the invention concern the task of arranging the local delivery of a password or corresponding information that represents a right to access an electronically controlled system.

### BACKGROUND

The ubiquitous user interface for interior lighting is the light switch, which conventionally meant one or two toggle or rocker switches in a panel next to the doorpost. As lighting systems have become more versatile, the simple switches have been replaced with matrices of several switches, turning knobs, sliders, and the like. Classrooms, lecture halls and other larger rooms where a large number of alternative lighting scenes are needed may have a control panel located at the podium or lectern. The control panel may include manually operable keys, switches, knobs, and/or slides, or it may take the form of a touch-sensitive display where the control elements appear as icons. Other house automation systems that must offer a user interface at a relatively easily reachable location include, but are not limited to, HVAC systems (heating, ventilation, air conditioning); burglar alarms; fire, smoke, and gas detectors; and access control systems.

Increasing controllability of all such systems comes with some inherent drawbacks. We may consider lighting as an example. When the sole possibility of controlling the lights meant switching the light on or off, the user of a room seldom needed or wanted to make further changes while staying in the room. Thus it did not matter if the light switch was located some distance away, close to the entrance of the room or even outside in the corridor. If, however, the lighting system offers accurate control of various aspects of lighting, such as intensity, hue, and colour temperature, the user may wish to make even relatively frequent changes. In such case the user may consider it inconvenient to walk to the doorpost every time he needs to fine tune the lighting.

Another inherent drawback is complicatedness. A single light switch with two positions was simple and intuitive to use. A lighting system with a number of controllable aspects necessitates either a large number of separate keys, switches, slides, knobs, etc. dedicated to the various aspects, or associating different functions with individual switches or keys depending e.g. on the length of pressing a particular key. Particularly users who only come to the room relatively seldom, or users who are not technically oriented, may experience such a user interface as intimidating or frustrating. The problem is made worse by the fact that the overall look and feel of the control panel must fit the style and furnishings of the room, and there are large differences in what is customary and preferable in different countries or regions, so that even a control panel that in technical sense offers exactly the same control functions may look wildly different depending on where, by whom, and for which environment it was designed.

Electronically controlled systems, such as lighting, HVAC, or other systems used in a constructed environment may require the user to enter a password or otherwise prove that the user has the right to give control commands to the system. In particular a need may arise to ensure that only such users gain access to the system who are physically present in the controlled environment, for example to prevent malevolent outsiders from switching off the lights of an adjacent room or building. A prior art publication GB 2512821 A suggests placing a barcode or QR code in the space to be controlled, so that only a user who can use his or her portable electronic device to actually read the barcode or QR code gains access to the system. Using a code sticker involves the inherent drawback that since replacing already distributed stickers is burdensome, the code is likely to remain the same for a long time, so that a malevolent outsider who has been there once may afterwards pretend to be present, utilizing a stored version of the code. This problem could be solved by using a small electronic display screen to display the code and by changing the codes frequently, as said publication also suggests, but displays are relatively valuable components, which could easily make the system prohibitively expensive to build.

A prior art document WO 2013/132416 discloses methods and apparatus for configuring the way in which a physical control panel can be used to control a lighting system. A mobile device can send configuration commands that change the way in which events identified at the control panel cause control actions in the system.

### SUMMARY

It is an objective of the present invention to provide a method and devices for controlling a house automation system so that users find it easy and convenient to control various available functions, even if different functions and different controlling options appear in various locations. Another objective of the invention is to allow easy updating and further developing of user interfaces of house automation systems, with minimal additional burden to users. A further objective of the invention is to make it easier to take into use house automation systems that are more versatile and involve more controllable aspects than their predecessors. Yet another objective of the invention is to add intuitiveness to the user interfaces of house automation systems.

Another objective of the invention is to provide a method and devices for locally delivering a password or corresponding information that represents a right to access an electronically controlled system so that the delivered password can be easily changed without requiring expensive components.

The objectives of the invention are reached with a method and apparatus as defined by the respective independent claims.

According to an example embodiment, there is provided a control panel for a house automation system, the control panel comprising:
- a configurable user interface,
- a memory for storing information descriptive of a current configuration of the user interface, and
- a wireless transceiver unit;
wherein said control panel is configured to use said wireless transceiver unit to transmit said information descriptive of said current configuration as a response to a query from an external device,
wherein the control panel further comprises
- a plurality of visual indicators (1202) for providing visual feedback of detected manipulation of parts of the control panel, and
- a control unit configured to control said visual indicators, and
wherein said control unit is configured to display a password for accessing said house automation system as a combination of visually detectable states of said visual indicators.

According to another example embodiment, there is provided a method for controlling a house automation system with a portable electronic device, the method comprising:
- wirelessly receiving and storing information descriptive of a current configuration of the user interface of a control panel,
- utilizing said information to display, on a touch-sensitive display, an image illustrating control functions that are accessible through said control panel,
- receiving user input in the form of detected manipulation of said touch-sensitive display,
- converting at least some of said user input into one or more commands for controlling said house automation system, and
- wirelessly transmitting said one or more commands to a controlling entity of said house automation system,
wherein the method further comprises exchanging access information between the portable electronic device and the control panel, comprising:
- displaying, on the touch-sensitive display, one or more input fields allowing a user of the portable electronic device to enter selections mimicking visually detectable states of visual indicators that the control panel is configured to use to provide visual feedback of detected manipulation of parts of the control panel,
- receiving user input in the form of detected manipulation of said touch-sensitive display, and displaying results of the user input by changing states of said one or more input fields,
- forming a password message, contents of which reflect the displayed results of the user input, and
- transmitting said password message to a device, access to which is to be gained through the portable electronic device.

According to yet another example embodiment, there is provided a computer program stored on a computer-readable medium comprising machine-executable instructions that, when executed by one or more processors, cause the implementation of a method according to the description above.

According to another example embodiment, there is provided control panel for a house automation system, comprising:
- a plurality of visual indicators for providing visual feedback of detected manipulation of parts of the control panel, and
- a control unit configured to control said visual indicators,
wherein said control unit is configured to display a password for accessing said house automation system as a combination of visually detectable states of said visual indicators.

According to another example embodiment there is provided a method for exchanging access control information between a portable electronic device and a control panel, comprising:
- displaying, on a touch-sensitive display of the portable electronic device, one or more input fields allowing a user of the portable electronic device to enter selections mimicking visually detectable states of visual indicators that the control panel is configured to use to provide visual feedback of detected manipulation of parts of the control panel, and
- receiving user input in the form of detected manipulation of said touch-sensitive display, and displaying results of the user input by changing states of said one or more input fields,
- forming a password message, contents of which reflect the displayed results of the user input, and
- transmitting said password message to a device, access to which is to be gained through the portable electronic device.

The exemplifying embodiments of the invention presented in this patent application are not to be interpreted to pose limitations to the applicability of the appended claims. The verb "to comprise" and its derivatives are used in this patent application as an open limitation that does not exclude the existence of also unrecited features. The features described hereinafter are mutually freely combinable unless explicitly stated otherwise.

The novel features which are considered as characteristic of the invention are set forth in particular in the appended claims. The invention itself, however, both as to its construction and its method of operation, together with additional objects and advantages thereof, will be best understood from the following detailed description of specific embodiments when read in connection with the accompanying drawings.

### BRIEF DESCRIPTION OF DRAWINGS

- Fig. 1: illustrates schematically a control panel and a portable electronic device,
- fig. 2: illustrates some functional parts of a control panel and a portable electronic device,
- fig. 3: illustrates a control engine of a control panel,
- fig. 4: illustrates an example of a stored configuration of a user interface,
- fig. 5: illustrates an example of replacing the image of a user interface with a different image,
- fig. 6: illustrates an example of augmenting the image of a user interface with additional features,
- fig. 7: illustrates an example of augmenting the image of a user interface with additional information,
- fig. 8: illustrates an example of a method,
- fig. 9: illustrates alternative steps of a method,
- fig. 10: illustrates parts of a lighting system,
- fig. 11: illustrates a method and computer program,
- fig. 12: illustrates schematically a control panel and a portable electronic device,
- fig. 13: illustrates an example of a method,
- fig. 14: illustrates an example of a method,
- fig. 15: illustrates a method and computer program, and
- fig. 16: illustrates a method and computer program.

### DETAILED DESCRIPTION OF EMBODIMENTS OF THE INVENTION

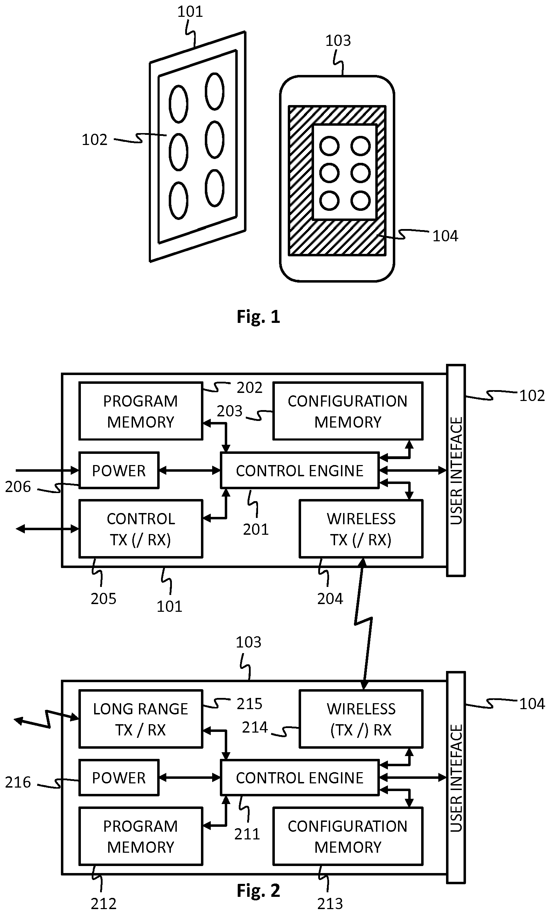

Fig. 1 illustrates the general principle of using a portable electronic device to pick up the identity, user interface, and functions of a control panel. The control panel 101 constitutes fixed means for controlling some functional aspects of a house automation system. The word "fixed" signifies that the control panel 101 is typically fixedly installed: it may resemble for example a conventional wall panel of a lighting-, HVAC-, or security system, and be located e.g. close to a doorpost or otherwise along the route that a user would naturally take on his or her way to and/or from a room or space, the lighting or other conditions of which the control panel 101 allows to be controlled. The fixed installation location may be also at a central point where a user might be expected to be when a need to control the house automation system arises, like at the podium of a lecture hall or close to the bed in a bedroom. It is, however, no strict requirement that the control panel 101 is fixedly installed. The approach described here can also be applied to picking up the identity, user interface, and functions of a control panel that itself could also be moved. The characterization "fixed means" should therefore be understood as something that is pertinent to a particular room, space, building, or area, and not meant to be continuously carried along by a user who moves between rooms, spaces, buildings, and/or areas.

The control panel 101 comprises a configurable user interface 102. The word "configurable" signifies that it is possible to change the appearance and functions of the user interface or to easily produce different variants, as opposed to a standardized user interface that could be expected to have the same appearance and same functions in a large number of places and uses. Configurability can be achieved mechanically, for example so that the user interface is composed of interchangeable modules, so that a manufacturing plant selects the modules for each control panel to be assembled. The mechanical appearance of a configurable interface may remain the same, in which case configurability can be achieved by changing the functions that parts of the interface control. An example of an electronically configurable user interface is a touch-sensitive screen, areas of which can be electronically configured to act as touch-sensitive keys or switches, touch-sensitive sliders, touch-sensitive scroll bars, touch-sensitive scales or dials, touch-sensitive turning knobs, and other kinds of touch-sensitive controls. Technologies on which a touch-sensitive screen may be based include, but are not limited to, resistive detection, capacitive detection, surface acoustic wave detection, infrared grid detection, optical imaging, piezoelectric detection, and acoustic pulse recognition. Another form of an electronically configurable user interface is an array of switches that themselves are mechanical but that can be programmed or wired in different ways to control different functions.

The configurable user interface 102 may additionally comprise an interchangeable graphical element for illustrating functions of parts of the touch-sensitive screen. Such an interchangeable element may comprise for example one or more stickers attached to the visible outer surface of the touch-sensitive screen, and/or an interchangeable card held in place between a transparent or translucent first layer and a second layer of the user interface. Silk screen printings or other printable graphical elements on the user interface are interchangeable in the sense that the manufacturer may choose, which elements to print and at which locations. It is also possible that the configurable user interface 102 comprises an electronic display that together with said touch-sensitive screen constitutes a touch-sensitive display. The electronic display could be used to electronically display graphical elements that illustrate functions of co-located parts of the touch-sensitive screen. Technically touch-sensitive displays are more complicated than simple touch-sensitive screens, but making changes in their configuration and operation is more straightforward because the graphical appearance can be changed through programming.

When the portable electronic device 103 is brought into the vicinity of the control panel 101, it can wirelessly receive and store information descriptive of a current configuration of the user interface 102 of the control panel 101. As a simple example the portable electronic device 103 may include a camera, with which it can take a picture of the user interface 102. According to another example the control panel 101 and the portable electronic device 103 may both comprise a suitable wireless transceiver, through which they can exchange information of said kind. The portable electronic device 103 is configured to utilize said information to display, on a touch-sensitive display 104, an image illustrating the control functions that are accessible through the control panel 101.

In fig. 1 the portable electronic device 103 is particularly configured to utilize said information to display an image of the control panel 101 (or at least the user interface 102 of the control panel 101) as it appears in reality. This explains the meaning of "picking up" the user interface 101 of the control panel 101: instead of physically accessing the user interface 102 of the control panel 101 itself, the user of the portable electronic device 103 may now access its image on the touch-sensitive display 104, and carry said image along together with the portable electronic device 103. The portable electronic device 103 receives user input in the form of detected manipulation of the touch-sensitive display 104, converts at least some of said user input into one or more commands for controlling the house automation system, and wirelessly transmits said one or more commands to a controlling entity of the house automation system.

Picking up the identity of the control panel 101 refers to the fact that the commands transmitted by the portable electronic device 103 will be handled in the house automation system in the same way as similar commands would have been handled had they resulted just from a user manipulating the user interface 102 of the control panel 101. In other words, the portable electronic device 103 may temporarily "impersonate" the control panel in the eyes of the house automation system. From the viewpoint of the house automation system it may be unnecessary to even know, whether a particular command originated from the control panel 101 or from the portable electronic device 103.

Picking up the functions of the control panel 101 refers to the fact that the user has at least a representative selection of those functions available through the user interface 104 of the portable electronic device 103 that are available through the user interface 102 of the control panel 101. Later in this description it will be shown that at least in some cases it may be advantageous to offer to the user more functions and/or more versatile functions through the user interface 104 of the portable electronic device 103 than through the user interface 102 of the control panel 101. In some cases it is even desirable that the user interface 104 of the portable electronic device offers to the user fewer functions and/or less versatile functions than the user interface 102 of the control panel 101.

All the associated communications between devices may take place transparently in the background; in other words when the user manipulates an image of the user interface on the touch-sensitive display 104, he or she observes the house automation system executing exactly the same actions as those that would result from manipulating the actual user interface 102 in the same way. Typically the user will have the possibility to keep the portable electronic device 103 within easy reach all the time, and at least closer than the fixedly installed control panel 101, so this makes controlling the house automation system much more convenient than having to walk to the control panel 101 every time.

Fig. 2 shows an example of what kind of functional blocks and technical means may be included in the control panel and the electronic device for making the above-described operation possible. The control panel 101 comprises a control engine 201 and the configurable user interface 102. The control engine 201 may be for example a microcontroller or a processor. It executes a computer program that is stored in a program memory 202 in the form of machine-readable instructions. A separate configuration memory 203 is shown in fig. 2 for storing a current configuration of the user interface 102, although the program memory 202 and the configuration memory 203 may in practice share common physical resources to a significant extent. The control panel 101 comprises also a wireless transceiver unit 204. The control panel 101 is configured to use the wireless transceiver unit 204 to transmit, as a response to a query from an external device, information descriptive of the current configuration read from the configuration memory 203. The brackets around the RX part in block 204 emphasize the fact that - for some embodiments - only a wireless transmitter unit may be sufficient.

Also shown in fig. 2 is another transceiver block 205 that the control panel 101 may use to communicate with further devices of the house automation system. The control panel 101 may use the transceiver block 205 as a transmitter to transmit further those commands that a user has given by manipulating the user interface 102 of the control panel 101 itself, if no additional portable electronic devices are involved. Commands that the user has given by manipulating the user interface 104 of the portable electronic device 103 may be transmitted from the portable electronic device 103 to the control panel 101, which then forwards them to further devices of the house automation system using the transceiver block 205.

If the transceiver block 205 includes also receiver functions, the control panel 101 may use it to receive status enquiries; configuration commands like address allocations and the like; software updates; and other transmissions from other devices of the house automation system. A power source block 206 takes care of producing and distributing the operating voltages that the other parts need in the control panel 101; as an example, there may be a connection from a mains AC network to the power source block 206, and one or more power converters in the power source block 206 to convert the mains AC voltage to the required operating voltages. The separate power source and transceiver blocks 205 and 206 in fig. 2 can be combined into one, particularly if so-called PLC (power line communications) are used, in which operating power and control commands share the same cables.

The portable electronic device 103 of fig. 2 comprises a control engine 211, which may be a microcontroller, a processor, or a combination of two or more microcontrollers and/or processors. It is configured to execute computer programs that are stored in a program memory 212 in the form of machine-readable instructions, and to store information descriptive of the current configuration of a control panel in a configuration memory 213. Physically the program memory 212 and the configuration memory 213 may share resources to a significant extent; the division illustrated in fig. 2 is merely logical. The portable electronic device 103 comprises a wireless transceiver unit 214, which may in some cases include only reception functions. An example of a portable electronic device is a smartphone, in which case it also contains a long range wireless transceiver unit 215 for communicating with the base stations of a mobile telephone system and/or with the access points of a wireless network. The power source block 216 of the portable electronic device typically comprises a rechargeable battery.

An example of operation is described next with reference to figs. 1 and 2. A lighting system is used as an example of a house automation system, and a smartphone is used as an example of a portable electronic device. A user walks into a room the lighting of which he or she wishes to control. A control panel of the lighting of that room is located close to the doorpost. The user places his or her smartphone close to the control panel. This gesture activates near field communications (NFC) between the two devices. Depending on the hardware and protocols used for communication, it may not even be necessary to place the smartphone close to the control panel; if short range wireless communications such as Bluetooth, ZigBee, or others are used in blocks 204 and 214 instead of near field communications, a sufficient trigger for activating communications may be the mere fact that the user enters the room, thus coming within a suitable range for said short range wireless communications.

Users typically have a strong need to control what their smartphones do and with which external devices they pair for communications. Therefore it may be advisable to somehow ensure that the smartphone does not pick up the identity, user interface, and functions of the control panel without the user wanting it to. Requiring the user to actually place the smartphone close to the control panel, i.e. using near field communications that may necessitate brief contact or at least a distance shorter than some tens of centimeters, may be sufficient for such ensuring - it is unlikely that the smartphone of the user would end up close enough to the control panel by accident, so the mere fulfilment of the conditions for near field communications may be interpreted as an expression of intent from the user. Requiring the user to actually place the smartphone close to the control panel also serves as a very intuitive way of beginning operation. The user gets the feeling that he or she is in control, and it won't come as a surprise that an image of the lighting control panel appears on the display on his or her smartphone. Yet another advantage of using near field communications and consequently requiring very short distance is that in spaces where a number of different control panels are located relatively close to one another it is still unlikely that the smartphone would attempts picking up the identity, user interface, and functions of an incorrect control panel.

Short range wireless communication systems such as Bluetooth or ZigBee may have ranges in the order of tens of meters, so it may be advisable to separately require the user to confirm that pairing and bonding with a particular control panel was indeed what he or she intended. Also in public areas such as office spaces, educational institutions, public service buildings, and the like it may be necessary to ensure that only those portable electronic devices are allowed to pair and bond with those control panels that have the proper authorization. Practices of ensuring only intended and allowable pairing and bonding between devices are widely known, and for the purposes of this description it is not significant, which of them is used, for which reason such practices are not described here in detail. However, a particularly advantageous method that can be used to facilitate such pairing and bonding is explained later in this text.

Irrespective of whether near field communications or short range wireless communications are used, the need for controlled pairing may be limited to only the first time when these two device communicate with each other. When the user has already used the system once, and the identities of the respective devices have been stored in the memories of their peers of communication, later occasions of applying the same method may run through the initial steps of the method with fewer requirements of user interaction.

After the user has briefly placed the smartphone close to the control panel and the information descriptive of the current configuration of the user interface of the control panel has been exchanged, the smartphone stores the information in its configuration memory 213 and displays, on its touch-sensitive display 104, an image illustrating control functions that are accessible through the control panel 101. Now when the user wants to e.g. change the colour of the lighting, he or she manipulates a colour selector displayed as a part of said image. The smartphone detects the manipulation of its touch-sensitive display and converts the detected user input into a command that tells what was the change that the user wanted to achieve. The smartphone transmits the command through the blocks 214 and 204 to the control panel, which now acts as the controlling entity of the house automation (here: lighting) system. It forwards the command through the transceiver block 205 to that part of the lighting system that drives the light sources of different colour, so that the desired change in colour of the lighting is achieved.

Taken that the transmission of the command from the smartphone to the control panel should not require returning close enough to the control panel for near field communications, it is logical to assume that even in those cases where the initial exchange of information took place through near-field communications between blocks 204 and 214, the devices are additionally capable of using e.g. Bluetooth, ZigBee, or other short range wireless communications. Thus the blocks 204 and 214 could have dual (NFC and short range) capabilities. If and when that is the case, also a hybrid embodiment can be presented for the initial exchange of information: the exchange of information may begin with a "handshake" through near field communications, while the actual exchange of information descriptive of the current configuration of the user interface may continue using Bluetooth, ZigBee, or other short range communications. Such a hybrid embodiment involves the advantages of intuitiveness of use and possible avoidance of explicit authentication or pairing permission queries from user, while simultaneously requiring the user to keep the smartphone close to the control panel only for a very short period of time: transferring the possibly large amount of information that describes the configuration of the user interface may continue over the short-range wireless communication connection after the user has already proceeded beyond the range of the near field communications.

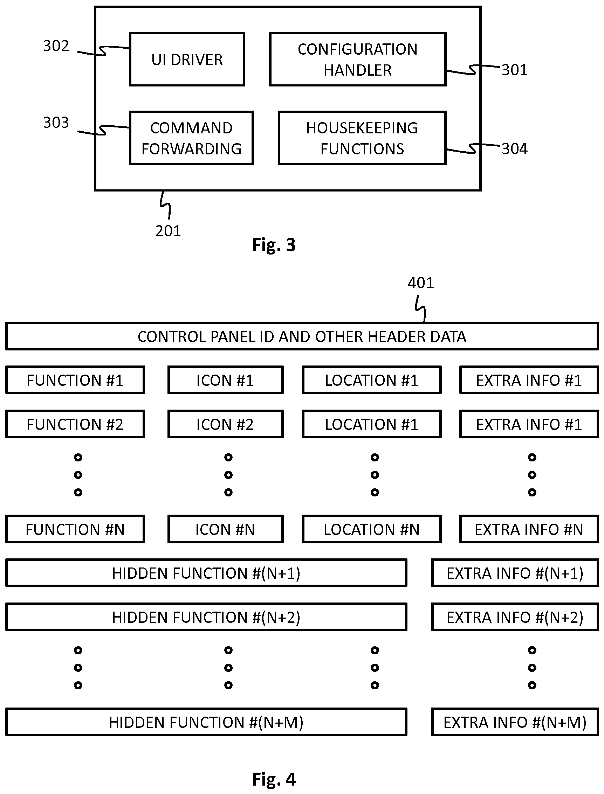

Fig. 3 illustrates an example of some functions that may be implemented within the control engine 201 of the control panel. The functions shown in fig. 3 are preferably processes that the control engine 201 runs as instructed by the computer program read from the program memory 202. Some or all of the functions shown in fig. 3 may also involve dedicated hardware either inside the control engine 201 or elsewhere in the control panel. Also it should be noted that while the control engine 201 has been introduced as a microcontroller or processor in singular, it is possible to use two or more microcontrollers and/or processors to implement the associated functions.

A configuration handler 301 is a process that maintains information descriptive of the current configuration of the user interface in memory; reads the stored information from the memory as required; transmits the information read from the memory to the device that requested it; and possibly also receives new, updated or changed information descriptive of a new, updated, or changed configuration of the user interface and uses it to overwrite any previous information in the memory. The first configuration of the control panel may have been stored in the configuration memory already at the stage of manufacturing the control panel or at the stage of commissioning for the first time the house automation system in which the control panel forms a part. Later a need may arise to change or update the configuration; this may be achieved through a dedicated programming interface of the control panel (not shown in the drawings) or through the near field and/or short range wireless transceiver 204, but it may also be achieved through the further transceiver block 205 by actions of a controlling device somewhere in the house automation system.

A user interface driver 302 is a process that sets up the various controls in the form of regions of the configurable user interface; maintains the user interface in operating condition for example by forming the suitable voltages for the different parts thereof; performs the detection of user manipulation of particular areas of the user interface; and converts the detected user inputs into electronic signals that can be further used to produce commands for transmission to further devices in the house automation system. During operation the user interface driver 302 utilizes the configuration that is currently stored in the configuration memory of the control panel 101.

A command forwarding section 303 is a process that receives signals representing detected user actions from the user interface driver 302 and from portable electronic devices; and forwards - to other devices of the house automation system - commands that represent user inputs, regardless of whether they originated from a user manipulating the user interface of the control panel or from a user manipulating the image of the user interface on the touch-sensitive display of his or her portable electronic device. The command forwarding section 303 may include command interpreting and protocol conversion functions, in case the form in which the announcements of detected user interaction come from the user interface driver 302 and/or from the wireless transceiver unit 204 in a form that as such is not yet suitable for transmission to the other devices.

A housekeeping functions section 304 is a process that takes care of basic operations of the control panel, for example by monitoring the conversion and distribution of power in the power source block; maintaining the correct status of data stored in memory; responding to status inquiries; and performing those parts of device-to-device authentication procedures that are on the responsibility of the control panel.

Fig. 4 illustrates schematically an example of what kind of elements may be included in the information descriptive of the current configuration of the user interface. In particular, the information should contain information descriptive of a current visual appearance of said configurable user interface, and/or information descriptive of house automation functions associated with and controllable through various parts of said configurable user interface. In fig. 4 field 401 is a header field that may contain e.g. an identifier of the control panel (to be used for example for differentiation in cases where a single portable electronic device has stored information associated with more than one control panel). Field 401 may also contain an identifier, version number, manufacturer id, and/or other general descriptive elements of the current configuration of the user interface.

The horizontal lines of fields from the one beginning with FUNCTION #1 to the one beginning with FUNCTION #N illustrate records, each of which illustrates one function that is accessible through the user interface of the control panel. The first field gives the number or other identifier of the function. The next field describes an icon or graphical symbol that can be used to represent the corresponding function on a touch-sensitive display. For example, if a function has the nature of on/off switching, the ICON field in the corresponding record may contain a value that is known to be associated with on/off switches. If the icons or graphical symbols are somehow commonly agreed upon or standardized, it suffices to store an identifier of the corresponding standardized symbol in the ICON field. At the other extremity is the use of the ICON field to store a complete image file or other electronic representation that a display driver may use to make the appropriate icon appear without any previous knowledge of how the icons should look like. Intermediate embodiments are possible, in which the ICON field does not need to contain the complete description of an image but only some simpler information on the basis of which an appropriate image can nevertheless be constructed.

The next field describes the location at which the corresponding icon appears in the user interface. For example if the user interface has a rectangular shape, all locations can be expressed in the form of Cartesian coordinate values. Corresponding coordinate representations can be devised for differently formed user interfaces. Codes, or references to some standardized representation, can be used in place of actual coordinates; for example, if the header field 401 revealed that the control panel contains 6 operable elements arranged in two vertical columns of 3 elements each, the location information may be e.g. of the type UL, ML, LL, UR, MR, LR (upper left, middle left, lower left, upper right, middle right, lower right).

At the end of the line on the right is an EXTRA INFO field that can be used to store any kind of the other information related to the function, for example validity restrictions (if a particular function should only be available at certain times of the day, for users of certain authority, etc.), conversion instructions (telling what rules should be obeyed in converting detected manipulation of the appropriate area of the user interface into a control command) or the like. If the lighting system is controlled through standardized commands, like DALI commands, the EXTRA INFO field (or another field particularly designated for commands) may contain the particular standardized command to be used for initiating the corresponding function.

The information descriptive of the current configuration of the user interface may include hidden functions, as illustrated in the lower part of fig. 4. Hidden functions are functions for which there is no accessible representation in the currently visible user interface of the control panel but that may be offered to the user as a part of a more versatile and/or differently displayed user interface on the touch-sensitive display of the portable electronic device. Examples of hidden functions are described in more detail later in this text. Since hidden functions have no icon and no location in the user interface of the control panel, fig. 4 does not show corresponding fields in the records that illustrate hidden functions. It should be noted that fig. 4 is provided as an example only, and the invention does not restrict in any way the amount and form of information that can be stored and transmitted to the portable electronic device as a part of the information descriptive of the current configuration of the user interface.

In fig. 1 it was assumed that the method according to an embodiment of the invention comprises displaying an image of the control panel (or at least of the user interface of the control panel) as it appears in reality. In other words, what the user sees on the touch-sensitive display 104 of the portable electronic device 103 appears to be just the same as the fixedly installed control panel 101, only (possibly) scaled in size to conveniently fit in the touch-sensitive display. Such an embodiment may be particularly convenient for users who have little experience in using systems of this kind, because they feel that they have just picked up the user interface to their portable electronic device and nothing else has changed.

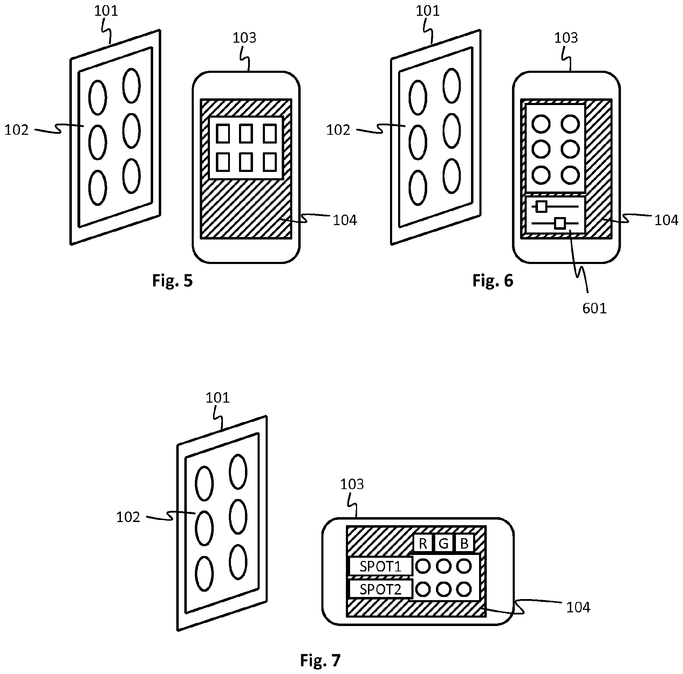

Fig. 5 illustrates a slightly different approach, which aims at serving users who are used to utilize a control panel of a particular kind and become irritated by the different designs and appearances of control panels in different buildings or different countries for example. According to fig. 5, the method according to an embodiment of the invention comprises displaying control options similar to those offered by the control panel 101 but in a different graphical format. The control panel 101 of fig. 5 shows six circular controls in two columns. It is assumed here that the user is more accustomed to rectangular controls in lines, for which purpose he or she has instructed the portable electronic device 103 to make a conversion, so that the image (and the underlying functionalities) seen on the touch-sensitive display 104 has the preferred graphical form. The conversion is performed by a software routine installed in the portable electronic device 103, and it may involve any kinds of changes to the graphical appearance of the user interface.

Fig. 6 illustrates schematically a case in which the method according to an embodiment of the invention comprises additionally displaying, on the touch-sensitive display 104 of the portable electronic device 103, control options that are not offered by (i.e. additional compared to those offered by) the user interface 102 of the control panel 101. It may be assumed that the information descriptive of the current configuration of the user interface of the control panel was of the kind shown in fig. 4, in the sense that it contained six records (N=6) with the FUNCTION, ICON, LOCATION, and EXTRA INFO fields, as well as two records (M=2) with the HIDDEN FUNCTION and EXTRA INFO fields. Only the first six correspond to control options that are offered by the user interface 102 of the control panel 101, in the form of six circular controls in two columns. These may include e.g. on/off switches and/or dimmers of six different luminaires.

The two records with HIDDEN FUNCTION and EXTRA INFO fields correspond to control options that are not offered by the user interface 102 of the control panel 101. In this example these may include e.g. colour temperature sliders of two parts of the lighting. The portable electronic device 103 utilizes the information it received in the corresponding HIDDEN FUNCTION and EXTRA INFO fields by composing corresponding icons (descriptive information of which may have been included in the HIDDEN FUNCTION and/or EXTRA INFO fields, even if not specifically shown as a field of its own) and by displaying these icons at a suitable location of the touch-sensitive display 104. In the example of fig. 6 these additional control options are displayed within an area 601 separate from the image of the originally visible parts of the user interface 102. The graphical representations of the original and additional control options could also be combined in various ways on the touch-sensitive display 104.

In addition to displaying more control options by the portable electronic device than those offered by the control panel, an embodiment may be presented in which the portable electronic device actually displays less control options than the control panel. For example, the control panel may include controls for all luminaires in a room, while a user might only want to (or be allowed to) control the closest luminaire(s) of his or her own desk. In such case the portable electronic device could include an editing program, with which the user could select only those controls for display on the touch-sensitive display that are needed.

Fig. 7 illustrates schematically a case in which the method according to an embodiment of the invention comprises additionally displaying, on the touch-sensitive display 104 of the portable electronic device 103, assistive information associated with control options of the house automation system available through the portable electronic device. In this example the controllable devices are two spotlights SPOT1 and SPOT2, and each of them has red (R), green (G), and blue (B) component light sources. The portable electronic device 103 has received, for example in the EXTRA INFO fields of the corresponding records, information about help texts that can be associated with the six different controls. The exemplary help texts in fig. 7 include the device identifiers SPOT1 and SPOT2, as well as the light source identifiers R, G, and B. A simple logic routine in the software executed by the portable electronic device 104 can be used to arrange the help texts on the display so that help texts common to two or more individual controls are displayed next to the columns or lines constituted by such controls.

In addition to the examples shown in figs 5, 6, and 7 the portable electronic device 104 can offer numerous other additional functionalities that enrich the user experience compared to just displaying an image of the control panel as it is. As an example, if the colour of light can be controlled, the portable electronic device 104 can display a swatch of the currently selected colour in addition to the image of the control panel, or it may display some portion of the image of the control panel in the currently selected colour. The portable electronic device could also display feedback information from its own sensors or from sensors somewhere else in the system; as an example if it is a HVAC system that is controlled and the portable electronic device contains a thermal sensor, it could display a reading of the current actual temperature in addition to displaying the target temperature that the user has just selected. The system to be controlled may contain diagnostic features, for example sensors that measure the temperature, rotational speed, current consumption, or other quantity of some critical components, and information coming from such diagnostic sensors can be displayed by the portable electronic device. The control panel may receive additional configuration information from the portable electronic device, so that together the two devices may offer more control options, and more versatile control options, to the user than any of them alone. The control panel may act as a gateway or bridge to other systems for example so that when operated through the portable electronic device it offers a control connection to a HVAC system while as such it would only be the control panel of a lighting system.

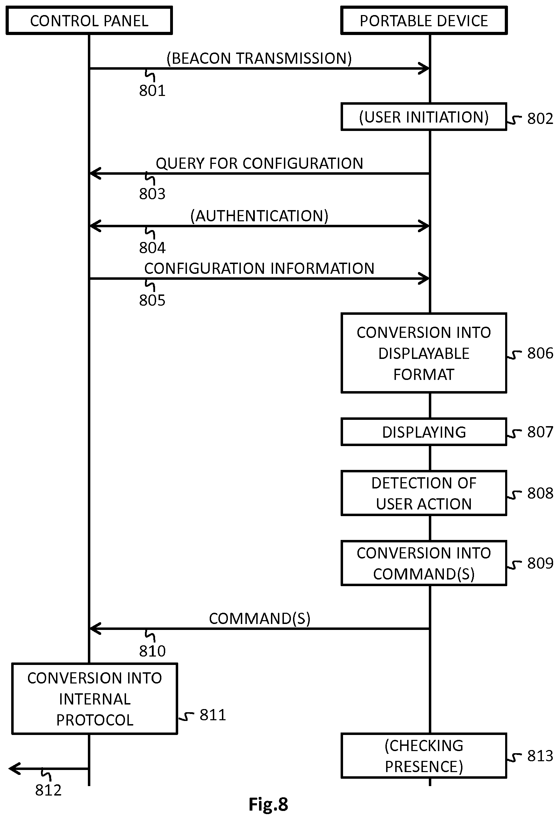

Fig. 8 illustrates an example of how the communications between the control panel and the portable electronic device, as well as certain operations executed by them, may proceed. A single-headed arrow in fig. 8 represents the acts of one device transmitting, the transmission propagating between the devices, and the other device receiving. A transmission shown as one single-headed arrow may in reality take the form of a number of transmissions, for example if the amount of information is divided into packets or other kinds of smaller parts, and/or if the receiving device also transmits acknowledgement messages and/or something else that is not considered as payload information. A double-headed arrow in fig. 8 represents a phase during which both devices may temporarily act as transmitting devices of payload information.

Step 801 illustrates a possibility, according to which the control panel may make beacon transmissions on a near field communications channel or a short range communications channel, in order to make its presence known to portable electronic devices. Beacon transmissions may be advantageous to make portable electronic devices of users remind their users about the possibility of picking up the user interface, identity, and functions of a control panel. Beacon transmissions may also refer to transmissions that a control panels makes simply in order to detect, whether any portable electronic devices have been brought, and still remain, close enough for successful near field communications or short range communications. Beacon transmissions are not needed at all in those embodiments of the method that rely on the initiative of the portable communications device to begin the near field or short range communications.

Step 802 illustrates the possibility of reacting to a user initiation of some kind. In a simple embodiment the user initiation means that the user brings the portable electronic device close enough to the control panel for successful near field or short range communications to begin. Other possible forms of user initiation involve the user giving some kind of initiation command, for example by touching an icon on the touch-sensitive display on the portable electronic device.

Step 803 illustrates sending a query from the portable electronic device to the control panel. With the query of step 803 the portable electronic device announces to the control panel that it is willing to receive information descriptive of the current configuration of the user interface of the control panel. A separate query is not needed, if the beacon transmissions of step 801 already included the information descriptive of the current configuration of the user interface. In such case (and, additionally, if the command transmissions from the portable electronic device go to a different device of the house automation system than the control panel) it may also be sufficient if the wireless transceiver unit in the control panel is actually only a transmitter unit.

Step 804 illustrates a possible phase of performing authentication between the control panel and the portable electronic device. If an authentication step 804 is included, its aim is to ensure that only those devices can communicate successfully that have the right to do so. The exact way in which authentication is performed is of little significance to the present invention, but some advantageous aspects of authentication are described later in this text.

Step 805 illustrates the actual transmission, from the control panel to the portable electronic device, of information descriptive of the current configuration of the user interface of the control panel. A general characterization of this step is that the transmission of information from the control panel eventually results in a situation where the portable electronic device is in possession of sufficient information for displaying to the user a user interface that allows the user to access at least a significant part of those control functions of the house automation system that are also accessible through the user interface of the control panel. Alternative approaches to fulfil this general aim include at least the following.
a) The control panel transmits explicit information descriptive of what controls are included in its user interface, how they look like, where in the user interface they are located, and what commands their manipulation should produce. The actual transmission made by the control panel is received directly and immediately by the portable electronic device, which can thus construct a replica of the user interface with little previous knowledge of its elements and appearance.
b) The portable electronic device comprises already some basic information of what a user interface of a control panel may include. For example, the general (standardized) graphical appearance of controls such as on/off switch, dimmer switch, and colour selector have been previously stored in the memory of the portable electronic device. The control panel only needs to transmit the number of controls of each type its user interface contains, and possibly also some information of their location. The portable electronic device then uses the "library" of information it already had in its possession to compose the user interface to be displayed on its touch-sensitive display.
c) There are only a limited number of standardized or otherwise predefined control panel layouts, and these have all been previously stored in the memory of the portable electronic device. The transmission made by the control panel only needs to contain a single identifier that tells, which of the alternative options the control panel has actually in use. The portable electronic device uses the identifier to locate the appropriate user interface layout from its memory, and makes it available on its touch-sensitive display.
d) One of b) or c) above, but with the addition that if the control panel transmits an identifier of a control or an identifier of a complete control panel layout that the portable electronic device doesn't recognize, the portable electronic device can respond by requesting further information, and the control panel responds to such request by sending the additional information that describes in detail the element that the portable electronic device didn't know.
e) One of a), b), c), or d) above, but with the addition that after a "handshake" between the control panel and the portable electronic device has made the house automation system aware that the portable electronic device needs information descriptive of the user information of the control panel, at least a part of the actual transmission of information that the portable electronic device eventually receives comes from a different device of the house automation system than the actual control panel.

Step 806 in fig. 8 represents an action by the portable electronic device, in which it processes the information it has received, utilizing it to instruct its own user interface driver both to display an image illustrating control functions that are accessible through the control panel and to set up the touch-sensitive areas that correspond to the appropriate parts of the displayed image. Displaying the image is shown as an action of its own at step 807, and it includes also putting the detection functions of the touch-sensitive display into a state of preparedness for detecting actions of the user.

Step 808 represents receiving user input in the form of detected manipulation of the touch-sensitive display, and step 809 represents converting at least some of said user input into one or more commands for controlling the house automation system. As an example, if step 808 involved the detection of a continuous series of consecutive touches along a substantially linear path between a coordinate point X, Y1 and point X, Y2 on the touch-sensitive display during a time period that was shorter than a predetermined limit, step 809 could involve composing a machine-readable form of a command "slider 3 from 80% to 45%". Step 810 represents wirelessly transmitting said one or more commands to the control panel, which in this case acts as a controlling entity of the house automation system.

Step 811 illustrates the control panel performing a conversion from the format in which the command(s) was/were received from the portable electronic device to a format in which control commands are transmitted between the devices of the house automation system. For example, if the house automation system is a lighting control system and the devices thereof apply the DALI (Digital Addressable Lighting Interface) standard, the conversion at step 811 may result in the control panel producing a DALI command. Step 811 may be unnecessary, if the command transmission from the portable electronic device at step 810 already contained the commands in a form suitable for further transmission. Step 812 illustrates the control panel transmitting the produced command further, for example into the DALI bus, with a value in the appropriate address field that directs the command to the intended recipient device.

Step 813 illustrates a check that can be made in order to ensure that the picked-up user interface of the control panel remains available at the touch-sensitive display of the portable electronic device only as long as it may be actual to the user. In other words, the portable electronic device may autonomously check, whether it is still present within an area, the house automation functions of which it should be able to control.

The presence check at step 813 may be made for example by periodically receiving, from a device coupled to the house automation system, a transmission to ensure that the portable electronic device is still within an area pertinent to functions that are controllable through the control panel. Alternatively or additionally it may be made by periodically checking from a location determination system included in or available to the portable electronic device that its location has not changed more than a predefined amount since said information was received and stored. The location determination system may be for example a built-in receiver of a satellite-based location determination system. Yet another possibility is a simple timeout, so that the picked-up user interface is only valid for a certain period of time. Only a positive finding at step 813 allows the portable electronic device to continue converting detected user input into commands and wirelessly transmitting these to a controlling entity of the house automation system. In fig. 8 such continuing represents a return to step 807.

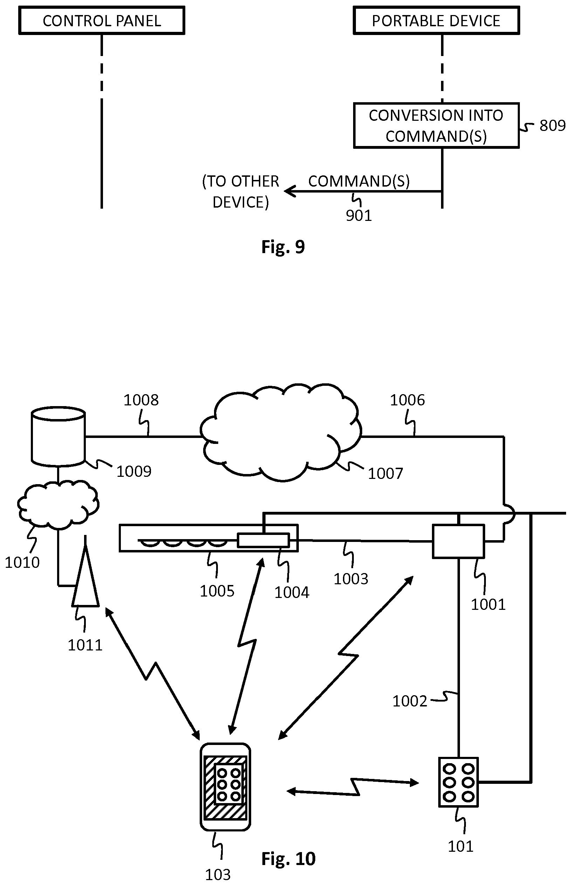

Fig. 9 illustrates an alternative end phase of the method, in which - after converting at least some of the detected user input into one or more commands at step 809 for controlling the house automation system - the portable electronic device transmits said one or more commands to some other controlling entity of the house automation system than the control panel. The question of possible other controlling entities is described in more detail in the following.

Fig. 10 illustrates some examples of possible communication connections in a framework in which the method of the above-described kind can be applied. The control panel 101 and the portable electronic device 103 are shown in the lower part of the drawing. A lighting system is used as an example of a house automation system. It comprises a lighting controller or router 1001, which exchanges control messages and commands with the control panel through a (wired or wireless) control connection 1002. Another (wired or wireless) control connection 1003 connects the lighting controller or router 1001 to the driver 1004 of a luminaire 1005. The control connections 1002 and 1003 may be segments of a lighting control bus, such as a DALI bus for example, and a large number of other devices of the same and different types may be coupled to the same bus. A heavier line illustrates the distribution of operating power to the control panel 101, the lighting controller or router 1001, and the driver 1004; at least some segments of the connections shown in fig. 10 may be unnecessary if operating power and control commands can be transmitted through the same connections.

The lighting controller or router of fig. 10 has an external communications connection 1006, which can be used for example for remote monitoring and reconfiguration of the lighting system through a long-distance data transfer network 1007 such as the Internet. Connections 1008 may exist to external data processing facilities, such as data servers 1009. These may further be coupled, through the same long-distance data transfer network and/or through dedicated networks 1010, to wireless data transceiver stations 1011 such as base stations of mobile cellular data networks and/or wifi networks. Depending on the hardware and software that are included in the various devices, the portable electronic device 103 may communicate wirelessly with at least some of the control panel 101, the lighting controller or router 1001, the driver 1004, and the wireless data transceiver station 1011. Embodiments of the method described above can utilize these communication connections in various ways.

According to one embodiment, all communications related to making the portable electronic device 103 pick up the identity, user interface, and functions of the control panel 101 take place directly between these two devices. Also the commands resulting from the user manipulating the touch-sensitive display of the portable electronic device 103 go first through the control panel 101, which forwards them to the appropriate devices through the control connection 1002. Embodiments of this kind have been extensively described above.

According to another embodiment, all communications related to making the portable electronic device 103 pick up the identity, user interface, and functions of the control panel 101 take place directly between these two devices, but the commands take a different path. The portable electronic device 103 may transmit the commands resulting from the user manipulating the touch-sensitive display directly to the lighting controller or router 1001, or even directly to the driver 1004.

According to a further embodiment the information that describes the current configuration of the user interface of the control panel 101 may be stored in the lighting controller or router 1001. In this embodiment, when the initial handshake between the control panel 101 and the portable electronic device 103 has been performed, said information is read from its storage in the lighting controller or router 1001 and transmitted to the portable electronic device either through the control panel 101, or directly from the lighting controller or router 1001, or through the driver 1004. If the last-mentioned alternative is chosen, the transmission from the driver 1004 and the portable electronic device 103 may take the form of radio waves or the form of light pulses which the driver 1004 transmits using the light sources of the luminaire 1005. The portable electronic device 103 may receive light pulses with a dedicated light sensor or with a digital imaging sensor that is otherwise used as a camera.

According to a yet further embodiment the information that describes the current configuration of the user interface of the control panel 101 may be stored in the data server 1009. In this embodiment, when the initial handshake between the control panel 101 and the portable electronic device 103 has been performed, said information is read from its storage in the data server 1009 and transmitted to the portable electronic device 103 either through the lighting system or through the wireless data transceiver station 1011.

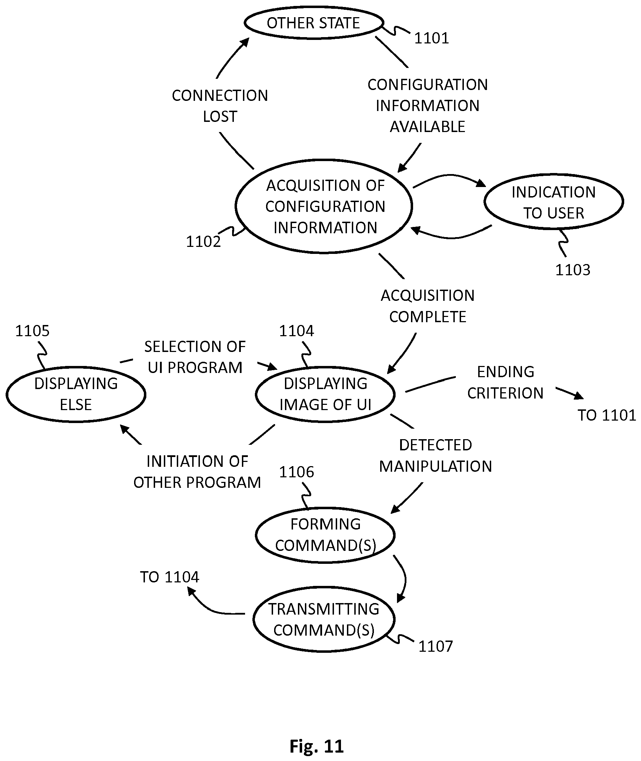

Fig. 11 illustrates schematically, in the form of a state diagram, a method for execution by the portable electronic device. Fig. 11 can also be viewed as representing a computer program stored on a computer-readable medium comprising machine-executable instructions that, when executed by one or more processors, cause the implementation of the corresponding method.

The execution of the method may begin at any other state, according to state 1101 in fig. 11. A factor that triggers a transition to state 1102 is the availability of information descriptive of the current configuration of a user interface of a control panel. At state 1102 the portable electronic device wirelessly receives and stores the available information, for example by communicating with a control panel over a near field communications connection or a wireless short range communications connection. If the connection is lost before the acquisition of the information has been completed, a return to state 1101 takes place. During the acquisition, or immediately before or immediately after is an indication can be given to the user that acquisition is about to be performed, is performed, or has been performed, according to state 1103.

Completing the wireless reception and storing of said information triggers a transition to state 1104, in which the portable electronic device utilizes said information to display, on a touch-sensitive display, an image illustrating control functions that are accessible through the control panel. It may happen that the user doesn't wish to immediately use the displayed image as a user interface, but initiates the execution of some other program in the portable electronic device, so that a transition to state 1105 takes place. However, the image of the user interface and the associated detection functions remain available in the background, so that if the user makes a selection that indicates a wish to utilize the displayed image of the user interface, the execution of the method returns to state 1104.

The portable electronic device may receive user input in the form of detected manipulation of that part of the touch-sensitive display that displays the image in state 1104. Such detected manipulation causes a transition to state 1106, where the portable electronic device converts at least some of said user input into one or more commands for controlling the house automation system. When the conversion into commands is complete, there occurs an immediate transition to state 1107 for wirelessly transmitting said one or more commands to a controlling entity of said house automation system. After the transmission the execution of the method returns to state 1104, essentially to wait for another input from the user.

A number of ending criteria can be defined, for example so that exit from state 1104 occurs if no manipulation of the user interface has been detected for a period of time longer than a predefined limit, or if no transmissions from the house automation system have been received during a predefined time interval, or if the user actively indicates that the user interface is not needed any more, or if the portable electronic device notices that its location has been changed more than a predefined limit. In fig. 11 all ending criteria lead generally back to state 1101.

The general instructions for executing the method illustrated in fig. 11 can be downloaded into the portable electronic device in the same way as any other application program, for example through a mobile cellular data network and/or wifi network.

A method and devices are described next for ensuring that only a portable electronic device that is, at least temporarily, in the same space as the control panel is allowed to access a home automation system. The method and devices that are described in the following are advantageously applicable in the framework that has been described above, but they have also wide applicability in all frameworks where secure pairing and bonding of a portable electronic device with a wireless access point is desired. If applied in the framework described above, the method and devices that are described in the following can be used, for example, at the authentication step 804 of fig. 8. The method and devices that are described in the following can also be applied in the framework of any other case where, as a part of pairing and/or bonding two devices together over a wireless connection, a piece of non-obvious information (i.e. a password or the like) should be conveyed from one device to the other locally, thus ensuring that the pairing and/or bonding can only succeed if the two devices are at least temporarily in the same space.

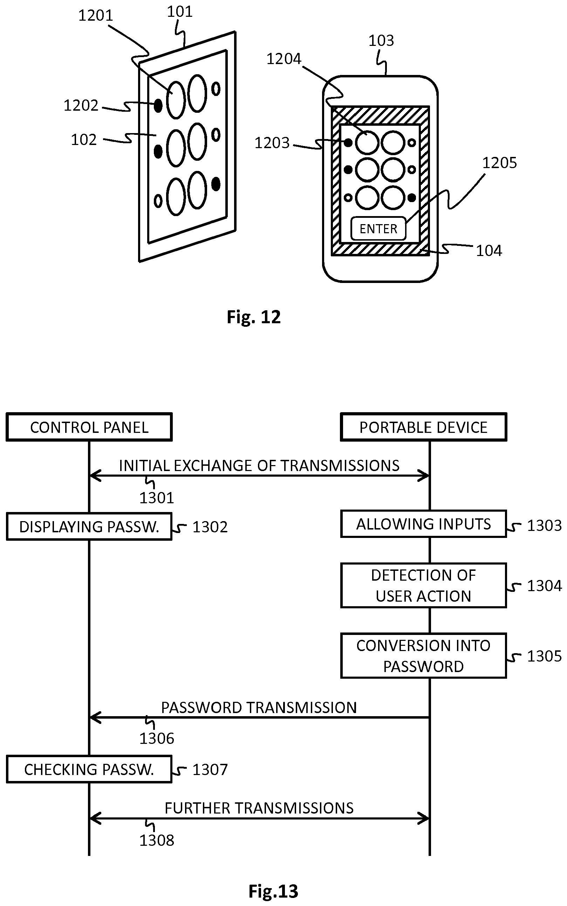

Fig. 12 illustrates schematically a control panel 101 of a house automation system and a portable electronic device 103 equipped with a touch-sensitive display 104. The user interface 102 of the control panel 101 comprises a plurality of touch-, press-, and/or movement-sensitive controls 1201. These can be for example keys or buttons, knobs, slides, switches, or touch-, press-, and/or movement-sensitive areas of a configurable touch-sensitive screen. Additionally the control panel 101 comprises a plurality of visual indicators 1202 for providing visual feedback of detected manipulation of parts of the control panel 101. The visual indicators 1202 may be for example indicator LEDs, used as so-called tell back LEDs that light up or go dark depending on the operational state of the system.

In a simple embodiment the control panel may be a wall panel of a lighting system, and each of the controls 1201 may be a button that the user may press to select one of mutually exclusive lighting options, such as full lighting, 50% dimmed lighting, relaxing warm lighting, effective lighting for meetings, and the like. Pressing one button causes that option to be selected, the corresponding tell back LED to be switched on, and all other tell back LEDs to be switched off. The appearance of such a control panel is intuitive if each indicator LED is adjacent to, or otherwise arranged in a one-to-one spatial relationship with, a corresponding touch- or press-sensitive control. One possible one-to-one spatial relationship is to place each tell back LED actually within the corresponding button, but in that case the finger of the user hides the LED from view at the moment when he or she presses the button. It may be more intuitive to place the tell back LED adjacent to the button so that the user gets the visual feedback already at the exact moment when he or she presses the button.

More elaborate embodiments may be presented, for example so that two or more options can be selected simultaneously, and/or so that the control panel comprises a plurality of externally visible graphical symbols representing functions to be controlled through said control panel. The graphical symbols may be shown elsewhere in the user interface than the actual controls. Also in this case the visual indicators may comprise a plurality of indicator LEDs, at least some of said indicator LEDs being adjacent to, or otherwise arranged in a one-to-one spatial relationship with, a corresponding graphical symbol.

Indicator LEDs are cheaper and simpler components than LCD or LED displays, and only require a very simple driving circuit. They are also very durable against attempted vandalism and abuse, and very reliable in long term use. Therefore they are more advantageous for use in mass produced devices meant for use by everybody, like wall panels of lighting control systems. The term indicator LED covers all kinds of semiconductor light sources that can be used to produce a relatively small dot of light or otherwise discernible visual effect at a desired location of a control panel.

The control panel 101 comprises a control unit, which is not shown in fig. 12 but which may be part of the control engine 201 if the control panel 101 has functional blocks similar to those shown schematically in fig. 2 earlier. In the block diagram representation of fig. 2 the visual indicators 1202 would be included in the user interface 102. Said control unit is configured to display a password for accessing the house automation system as a combination of visually detectable states of the visual indicators 1202. In fig. 12 an example of displaying a password is schematically illustrated by showing some of the visual indicators 1202 as black dots and the others as white dots. If the visual indicators 1202 are indicator LEDs, using them to display a password may mean displaying a particular combination of lit and unlit indicator LEDs.

The user of the portable electronic device 103 sees the visually detectable states of the visual indicators 1202; taken the example above, the user sees which LEDs are lit and which are unlit. The portable electronic device 103 displays, on its touch-sensitive display 104, one or more input fields allowing a user of the portable electronic device to enter selections. The selections that the user makes mimic the visually detectable states of the visual indicators 1202. For example, if the visual indicators are indicator LEDs, the user may select the image of each indicator LED to "light up" or "be dark". These descriptions are indicative only, because the display of a portable electronic device would just use differently coloured areas of the display to mimic "lit" and "unlit" indicator LEDs.

The invention does not limit the way in which the portable electronic device 103 displays the input fields, but if - like in the example of fig. 12 - the touch-sensitive display 104 shows an image of the user interface 102 of the control panel 101, it is intuitive to the user to make the input fields correspond to either the images 1203 of the visual indicators 1202 or the images 1204 of the controls 1201. For example, each input field may be at and/or around the location of the image 1203 of the corresponding indicator LED. The user may then tap the images 1203 of the indicator LEDs on the touch-sensitive display 104, making them toggle between "on" and "off", until the pattern of "lit LEDs" and "unlit LEDs" displayed on the touch-sensitive display 104 is the same as those in the control panel 101. Another possibility is that there is a text input field on the touch-sensitive display 104, and the user enters the "digital code" that the lit and unlit visual indicators represent as a string of 1's and 0's. The concept of an "input field" may be taken generally to represent an area of the touch-sensitive display 104 that is responsive to touching, as well as that area of the touch-sensitive display 104 the visual appearance of which changes in response to such touching.

Earlier in this description it was assumed that the portable electronic device 103 is capable of displaying the image of the user interface 102 of the control panel 101 because it received and stored information descriptive of a current configuration of the user interface. Indeed, the method may comprise:
- wirelessly receiving and storing, at the portable electronic device, information descriptive of a current configuration of the user interface of the control panel, and
- utilizing said information to display, on the touch-sensitive display, an image illustrating control functions that are accessible through said control panel;
so that said input fields are located on the touch-sensitive display in the same places relative to said image as the locations of said visual indicators in the user interface of the control panel.

It should be noted, however, that the mere purpose of locally delivering a password or corresponding information that represents a right to access an electronically controlled system does not require such a preceding step. For example, the configuration of the control panel 101 may be in accordance with some general standard, and the portable electronic device 103 may know such a standardized configuration on the basis of some previous programming step, without having to exchange any information thereof between these two devices. For the purpose of locally delivering a password or corresponding information that represents a right to access an electronically controlled system it is not even necessary to make the portable electronic device 103 display any graphical representation 1204 of the controls 1201; it would be sufficient to display just the images 1203 of the visual indicators 1202.

In addition to the images 1203 of the visual indicators 1202 the portable electronic device 103 may display instructions to the user (not shown in fig. 12), like a text "Please tap the images of the indicator LEDs to make the pattern match that shown on the control panel" or the like. Additionally the portable electronic device 103 may show an Enter button 1205 or some corresponding means for the user to indicate that the pattern is ready.

Fig. 13 illustrates some exemplary steps of a method for exchanging access control information between a portable electronic device and a control panel in the situation that was shown schematically in fig. 12. Step 1301 represents any initial exchange of transmissions that eventually establish a state at which it becomes necessary to exchange access control information. Step 1301 may include e.g. the steps 801, 802, and 803 of fig. 8 as described earlier, and - changing the order of steps slightly from that shown in fig. 8 - it may also include the step 805 of transmitting configuration information. At step 1302 the control panel displays a password for accessing the house automation system as a combination of visually detectable states of the visual indicators 1202. Step 1303 represents the portable electronic device displaying, on its touch-sensitive display, one or more input fields allowing a user of the portable electronic device to enter selections mimicking visually detectable states of the visual indicators 1202.

Step 1304 represents receiving user input in the form of detected manipulation of the touch-sensitive display, and displaying results of the user input by changing states of said one or more input fields. As explained above, this may mean e.g. detecting that the user taps the images of the indicator LEDs on the touch-sensitive display 104, and making said images represent lit LEDs or unlit LEDs depending on the number of detected taps on each of them. Step 1305 represents forming a password message, contents of which reflect the displayed results of the user input. The transition from step 1304 to step 1305 may take place automatically after a certain time, or it may take place automatically when the portable electronic device detects that the user has found the correct pattern, or it may take place as a response to the user hitting an Enter button 1205 or the like.

Step 1306 represents transmitting said password message to a device, access to which is to be gained through the portable electronic device. In fig. 1306 the portable electronic device transmits the password message to the control panel, which compares the password it received through its wireless receiver to information on the basis of which it previously formed the combination of visually detectable states of said visual indicators. The controlling entity within the control panel that makes the comparison at step 1307 may be the same control engine that originally controlled the visual indicators, or it may be some other programmable part of the control panel. The controlling entity outputs a result of such comparing, said result indicating either match or mismatch. The controlling entity is configured to either allow or preclude further use of functions of the control panel by an external device from which said password was received, depending on whether said result indicated match or mismatch respectively. In fig. 13 it is assumed that the result indicated match, so that further transmissions may take place between the devices according to step 1308.

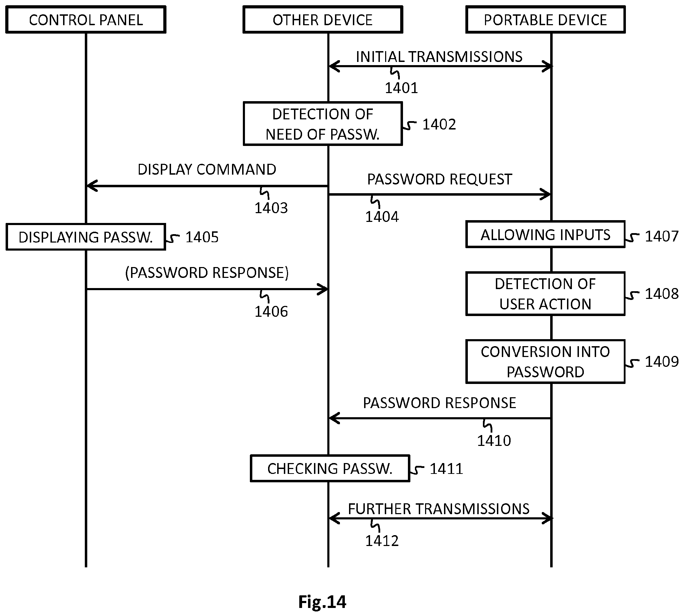

Fig. 14 illustrates some exemplary steps of a method for exchanging access control information between a portable electronic device, a control panel, and another device that has or may set up communication connections with the two other devices. This kind of a situation may arise for example in a case where a HVAC system; burglar alarm; fire, smoke, or gas detector; access control system; or other house automation system comprises a control unit that can be controlled with a portable electronic device, but only on the condition that secure pairing between the two has been established. Such a control unit may be equipped for example for communications through the so-called internet of things, so that it can establish a connection with e.g. a correspondingly equipped control panel located nearby. The control panel may be a control panel of the same house automation system as the control unit, but it may also be part of some completely different system.

Step 1401 represents arbitrary initial transmissions between the portable electronic device and the other device. At step 1402 the execution of a program at the other device arrives at a point where a password should be required from the portable electronic device before some further steps can be executed, i.e. before access to some further functions of the house automation system can be granted to the portable electronic device. At step 1403 the other device transmits to the control panel a command to display a password using visual indicators that the control panel normally uses to provide visual feedback of detected manipulation of parts of the control panel. At step 1404 the other device transmits to the portable electronic device a request for a password. The order and timing of steps 1403 and 1404 has little significance.

At step 1405 the control panel displays a password as a combination of visually detectable states of the visual indicators mentioned above. The password may be one that was explicitly commanded by the other device at step 1403, or the control panel may decide the password of its own motion. Particularly in the latter case a step 1406 may follow, in which the control panel acknowledges to the other device that it has proceeded by displaying the password; the message sent at step 1406 may make the other device aware of the actual password displayed, if the control panel decided it of its own motion.

Steps 1407, 1408, and 1409 at the portable electronic device may correspond to the steps 1303, 1304, and 1305 of fig. 13. In particular at step 1407 the portable electronic device instructs its user to key in the password by copying the combination of states of the visual indicators at the control panel. In order for the process to be most intuitive to the user, the portable electronic device should at this stage be aware of how the user interface of the control panel looks like, so that it can arrange the input fields that correspond to the visual indicators properly on its touch-sensitive display. If the control panel is of some standardized type, the portable electronic device may simply display an image of a standardized control panel. The portable electronic device may also have received information descriptive of the current configuration of the control panel from the other device at step 1401, at step 1404, or at some other preceding step, taken that the other device was in possession of such information - the control panel could have sent the information to the other device at step 1406, in which case step 1404 could take place only thereafter and convey not only the request for a password but also the information descriptive of the current configuration of the control panel. Yet another possibility is that somewhere between steps 1402 and 1407 the control panel used its own wireless transceiver unit to transmit information descriptive of the current configuration of its user interface to the portable electronic device.

At step 1408 the portable electronic device detects actions of the user that lead to the images of the visual indicators assuming colors and/or brightness values that make them mimic the current state of the visual indicators on the control panel. At step 1409 the portable electronic device uses the detected used actions to form a corresponding password, which it transmits to the other device at step 1410. At step 1411 the other device checks, whether the password received from the portable electronic device matches the known form of the password. If it does, pairing and other communications between the portable electronic device and the other device may continue according to step 1412.

Another embodiment could combine features from figs. 13 and 14, for example so that the method proceeds otherwise as in fig. 4, but also the transmission of a password response (step 1410 in fig. 14) goes from the portable electronic device to the control panel. In such a case the step of checking of the correctness of the password could take place in the control panel, which would then only announce to the other device a positive or negative result. Alternatively the control panel could forward the password it received from the portable electronic device to the other device unchecked, so that it would remain on the responsibility of the other device to make the password check, just like step 1411 in fig. 14.

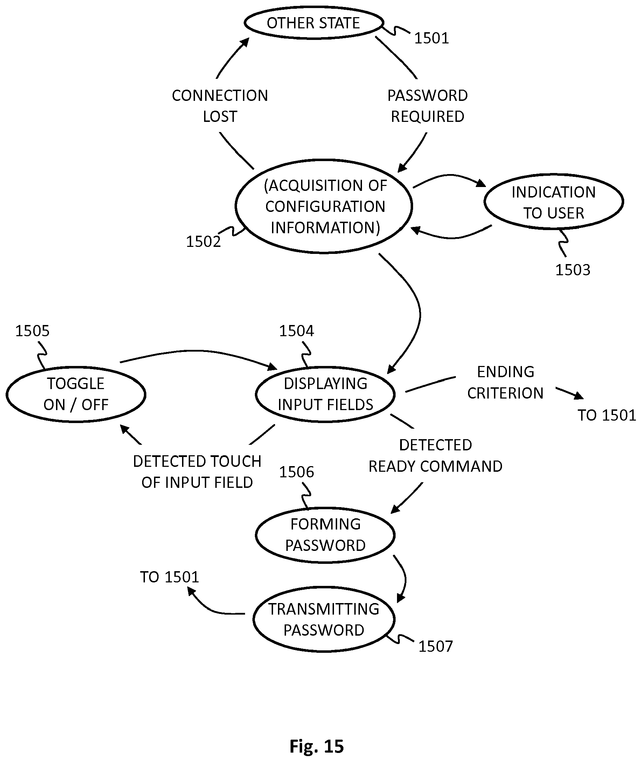

Fig. 15 illustrates schematically, in the form of a state diagram, a method for execution by the portable electronic device. Fig. 15 can also be viewed as representing a computer program stored on a computer-readable medium comprising machine-executable instructions that, when executed by one or more processors, cause the implementation of the corresponding method.

The execution of the method may begin at any other state, according to state 1501 in fig. 15. A factor that triggers a transition to state 1502 is the occurrence of a need for a password for secure pairing and/or bonding with another device. If the portable electronic device is not yet in possession of information of the configuration of the user interface of a nearby control panel, it may acquire such information while in state 1502, by wirelessly receiving and storing information descriptive of a current configuration of the user interface of the control panel. It may the proceed to utilizing said information to display, on the touch-sensitive display, an image illustrating control functions that are accessible through said control panel, so that said input fields are located on the touch-sensitive display in the same places relative to said image as the locations of said visual indicators in the user interface of the control panel.

An indication of the acquisition state may be given to the user according to state 1503, for example by showing a "wait" symbol or an information notice on a display. Losing connection with the device from which the configuration information is to be acquired causes a return to the other state 1501.

State 1504 represents displaying, on a touch-sensitive display of the portable electronic device, one or more input fields allowing a user of the portable electronic device to enter selections mimicking visually detectable states of visual indicators that the control panel is configured to use to provide visual feedback of detected manipulation of parts of the control panel.

During state 1504 the portable electronic device also receives user input in the form of detected manipulation of said touch-sensitive display. A detected manipulation (e.g. a simple touch, or sweep, or tapping) causes a temporary transition to state 1505, which represents displaying results of the user input by changing states of said one or more input fields. For example, the displayed input fields may be images of visual indicators of the kind mentioned above, and the step of displaying results of the user input may comprise toggling each image of a particular visual indicator between lit and unlit states depending on how many times the touch-sensitive display was touched at the corresponding location.

Detecting a ready command (which may be explicit, e.g. the user tapping on a "ready" or "enter" button, or implicit, e.g. the user waiting longer than a predetermined time limit without giving further inputs) causes a transition to state 1506, which represents forming a password message, contents of which reflect the displayed results of the user input. A further transition occurs to state 1507, which represents transmitting said password message to a device, access to which is to be gained through the portable electronic device. The device may be e.g. the control panel or some other device of the same system, or even a device of a completely different system that only used the control panel as means for displaying the password. After transmission the portable electronic device may return to any other state, as illustrated by the general other state 1501 in fig. 15.

The general instructions for executing the method illustrated in fig. 15 can be downloaded into the portable electronic device in the same way as any other application program, for example through a mobile cellular data network and/or wifi network.

The following numbered paragraphs summarize aspects of how one could utilize the displaying of a password using visual indicators that the control panel normally uses to providing visual feedback of detected manipulation of parts of the control panel, irrespective of what other features are or are not included.
1. A control panel for a house automation system, comprising:
   - a plurality of visual indicators for providing visual feedback of detected manipulation of parts of the control panel, and
   - a control unit configured to control said visual indicators,
   wherein said control unit is configured to display a password for accessing said house automation system as a combination of visually detectable states of said visual indicators.
2. A control panel according to numbered paragraph 1, wherein said visual indicators are semiconductor light sources.
3. A control panel according to numbered paragraph 2, wherein the control panel comprises a plurality of touch- or press-sensitive controls, and said visual indicators comprise a plurality of indicator LEDs, at least some of said indicator LEDs being adjacent to, or otherwise arranged in a one-to-one spatial relationship with, a corresponding touch- or press-sensitive control.
4. A control panel according to numbered paragraph 2 or 3, wherein the control panel comprises a plurality of externally visible graphical symbols representing functions to be controlled through said control panel, and said visual indicators comprise a plurality of indicator LEDs, at least some of said indicator LEDs being adjacent to, or otherwise arranged in a one-to-one spatial relationship with, a corresponding graphical symbol.
5. A control panel according to any of the numbered paragraphs 1 to 4 above, comprising a wireless receiver, wherein a controlling entity within the control panel is configured to compare a password received through said wireless receiver to information on the basis of which said combination of visually detectable states of said visual indicators was formed, and to output a result of such comparing, said result indicating match or mismatch.
6. A control panel according to numbered paragraph 5, wherein said controlling entity is configured to either allow or preclude further use of functions of the control panel by an external device from which said password was received, depending on whether said result indicated match or mismatch respectively.
7. A method for exchanging access control information between a portable electronic device and a control panel, comprising:
   - displaying, on a touch-sensitive display of the portable electronic device, one or more input fields allowing a user of the portable electronic device to enter selections mimicking visually detectable states of visual indicators that the control panel is configured to use to provide visual feedback of detected manipulation of parts of the control panel, and
   - receiving user input in the form of detected manipulation of said touch-sensitive display, and displaying results of the user input by changing states of said one or more input fields,
   - forming a password message, contents of which reflect the displayed results of the user input, and
   - transmitting said password message to a device, access to which is to be gained through the portable electronic device.
8. A method according to numbered paragraph 7, wherein the displayed input fields are images of said visual indicators, and the step of displaying results of the user input comprises toggling each image of a particular visual indicator between lit and unlit states depending on how many times the touch-sensitive display was touched at the corresponding location.
9. A method according to any of numbered paragraphs 7 or 8, wherein the step of transmitting the password message comprises transmitting the password message to the control panel.
10. A method according to any of numbered paragraphs 7 to 9, additionally comprising:
   - wirelessly receiving and storing information descriptive of a current configuration of the user interface of the control panel, and
   - utilizing said information to display, on the touch-sensitive display, an image illustrating control functions that are accessible through said control panel;
so that said input fields are located on the touch-sensitive display in the same places relative to said image as the locations of said visual indicators in the user interface of the control panel.

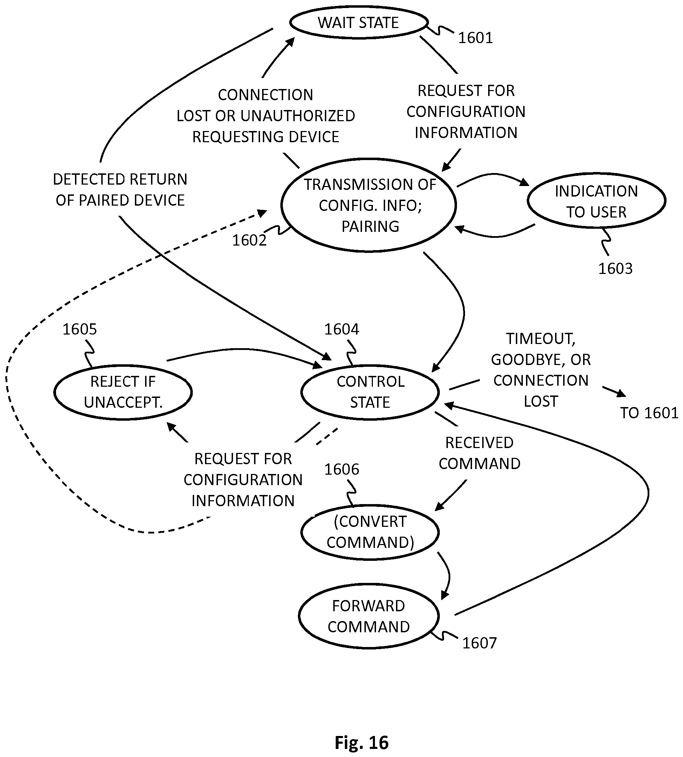

Fig. 16 illustrates schematically, in the form of a state diagram, a method for execution by a control panel. Fig. 16 can also be viewed as representing a computer program stored on a computer-readable medium comprising machine-executable instructions that, when executed by one or more processors, cause the implementation of the corresponding method. The method and/or computer program of fig. 16 can be applied in association with any and all embodiments described above; for example, it is not relevant whether or not the control panel that executes the method of fig. 16 is also configured to display a password for accessing a house automation system as a combination of visually detectable states of visual indicators.

The execution of the method begins at a wait state, according to state 1601 in fig. 16. It is characteristic to the wait state that there are currently no portable electronic devices bonded with the control panel, so the control panel is not expected to receive any command transmissions. The wait state 1602 may involve a transmission power and/or a reception readiness of the control panel being kept at a relatively low level, so that any exchange of wireless transmissions between the control panel and portable electronic devices requires bringing such a portable electronic device relatively close to the control panel.

A factor that triggers a transition to state 1602 is the appearance of a - previously unpaired - portable electronic device within the (possibly relatively short, due to the relatively low transmission power and/or reception readiness) distance at which the portable electronic device may request the control panel to send configuration information. State 1602 involves the use of a wireless transceiver unit of the control panel to transmit information descriptive of the current configuration of the user interface as a response to a query from the external device. It may (but does not need to) involve displaying a password for accessing the house automation system as a combination of visually detectable states of visual indicators of the control panel. It may also involve giving some visual, audible, or other indication to the user that the pairing and bonding process if going on, as illustrated separately with state 1603. If the connection is lost before the pairing and bonding is completed, or if the requesting device is found to be unauthorized for pairing and bonding, a return to the wait state 1601 occurs.

Successfully completing the pairing and bonding process at state 1602 leads to state 1604, which is here called the control state. It is characteristic to the control state that at least one portable electronic device has been paired and bonded with the control panel, so the control panel may expect to receive command transmissions. The control state 1604 may involve a transmission power and/or a reception readiness of the control panel being kept at a relatively high level, so that exchanging wireless transmissions between the control panel and portable electronic devices is possible irrespective of where within the controlled space the portable electronic device is located.

It may happen that while the control panel is in the wait state 1601, within the range of its (possibly relatively low-power, due to the wait state) wireless transmission capability appears a portable electronic device that is "known", i.e. that has already paired with the control panel within a preceding time frame that was not longer than some predetermined expiration limit for pairing. This may cause a direct transition from state 1601 to state 1604 without any further intermediate transmissions, meaning that a returning user may simply "tap" the control panel with his or her portable electronic device, or bring his or her portable electronic device close enough to the control panel, to continue controlling the house automation system.

The operation of the control panel in the control state 1604 may involve receiving commands from the portable electronic device, possibly converting received commands to some form suitable for forwarding (as in state 1606), and forwarding commands to further devices in the house automation system (as in state 1607).

The behavior of the control panel with respect to further pairing and/or bonding requests while in the control state 1604 may vary depending on e.g. how many portable electronic devices are allowed to simultaneously have an active bond with the control panel, and/or whether a particular portable electronic device (or some particular portable electronic devices) is (are) more privileged for controlling than others. According to one embodiment, the control panel only accepts one portable electronic device at a time for controlling. Thus if a request for pairing and/or bonding comes from a further portable electronic device comes while the control panel is in the control state 1604, the control panel may reject the request according to state 1605. According to another embodiment, the control panel only accepts further pairing requests but not further bonding requests while in the control state 1604, i.e. allows further electronic devices to prepare themselves for the ability of sending commands to the control panel, but tells them to wait until the bond with the currently acknowledged portable electronic device expires. According to yet another embodiment the control panel may accept any number of further portable electronic devices to "join the party", one possibility of which is illustrated with the dashed arrow in fig. 16.

Assuming that only one portable electronic device at a time is given the permission to bond with and make command transmissions to the control panel, it is advantageous to devise a mechanism for releasing the bond. As an example, the control panel may apply a timeout, which means that if no command transmissions were received from the bonded portable electronic device for a duration of time longer than a predetermined limit, the bond expires. The bonded portable electronic device may also explicitly renounce the bond, by transmitting a so-called goodbye message to the control panel. Yet another criterion for releasing a previously made bond is detecting that the portable electronic device has moved out of range or communications with it have otherwise become impossible. Whenever a bond is released for whatever reason, the control panel may return to the wait state 1601. If there were two or more simultaneous bonds with different portable electronic devices, the control state 1604 continues with respect to that or those portable electronic device(s) with respect to which no ending criterion has been fulfilled.

The exemplary embodiments described above do not constitute an exhaustive or limiting description of the scope of protection defined by the appended claims, but variations and modifications are possible. For example, while the embodiments described above have concentrated on exactly one control panel interacting with exactly one portable electronic device, the system may comprise more control panels and/or more portable electronic device. A user having two portable electronic devices at his or her disposal might use one of them to show an image of the control panel in one format, and the other to show an image of the control panel in another format. According to another example the user could have one portable electronic device, with which he or she could pick up the user interface, identity, and functions of two or more control panels, images of which could be shown in parallel or in an alternating manner on the display of the portable electronic device. In particular in the last-mentioned embodiment, but also in embodiments where exactly one portable electronic device is used to pick up the identity, user interface, and functions or exactly one control panel, it may be advantageous to make the portable electronic device display also an identifier of the control panel (or the space, the conditions of which are controlled through the control panel) in addition to the actual image, so that the user can easily keep track of which control panels are actually available for use through the portable electronic device. Such an identifier could be transferred from the control panel to the portable electronic device for example in the header field of the information that was schematically illustrated in fig. 4. Another possible variation to the embodiments described so far is the use of so-called LiFi networks for wireless communication, meaning that the vehicle of communication is not radio waves but modulated light.

## Claims

1. A control panel (101) for a house automation system, the control panel (101) comprising:
- a configurable user interface (102),
- a memory (203) for storing information descriptive of a current configuration of the user interface (102), and
- a wireless transceiver unit (204);
wherein said control panel (101) is configured to use said wireless transceiver unit (204) to transmit (805) said information descriptive of said current configuration as a response to a query (803) from an external device (103),
**characterized in that** the control panel (101) further comprises
- a plurality of visual indicators (1202) for providing visual feedback of detected manipulation of parts of the control panel (101), and
- a control unit configured to control said visual indicators (1202),
wherein said control unit is configured to display a password for accessing said house automation system as a combination of visually detectable states of said visual indicators (1202).

2. A control panel (101) according to claim 1, wherein said configurable user interface (102) comprises a touch-sensitive screen.

3. A control panel (101) according to claim 2, wherein said configurable user interface (102) additionally comprises an interchangeable graphical element for illustrating functions of parts of the touch-sensitive screen.

4. A control panel (101) according to claim 2, wherein said configurable user interface (102) additionally comprises an electronic display that together with said touch-sensitive screen constitutes a touch-sensitive display.

5. A control panel (101) according to any of the preceding claims, wherein said wireless transceiver unit (204) comprises a near field communications transceiver.

6. A control panel (101) according to any of the preceding claims, wherein said wireless transceiver unit (204) comprises a short range communications transceiver.

7. A control panel (101) according to claim 6, comprising a command forwarding unit (303) configured to forward a command received by said short range communications transceiver to a further device or the house automation system.

8. A control panel (101) according to any of the preceding claims, wherein said information descriptive of said current configuration comprises at least one of:
- information descriptive of a current visual appearance of said configurable user interface (102), and
- information descriptive of house automation functions associated with and controllable through various parts of said configurable user interface (102).

9. A control panel (101) according to any of the preceding claims, wherein the control panel is a control panel of at least one of interior lighting and exterior lighting.

10. A method for controlling a house automation system with a portable electronic device, the method comprising:
- wirelessly receiving and storing (1102) information descriptive of a current configuration of the user interface (102) of a control panel (101),
- utilizing said information to display (1104), on a touch-sensitive display (104), an image illustrating control functions that are accessible through said control panel (101),
- receiving user input in the form of detected manipulation of said touch-sensitive display (104),
- converting (1106) at least some of said user input into one or more commands for controlling said house automation system, and
- wirelessly transmitting (1107) said one or more commands to a controlling entity (1001) of said house automation system
**characterized in that** the method further comprises exchanging access information between the portable electronic device and the control panel (101), comprising:
- displaying (1504), on the touch-sensitive display (104), one or more input fields allowing a user of the portable electronic device to enter selections mimicking visually detectable states of visual indicators (1202) that the control panel (101) is configured to use to provide visual feedback of detected manipulation of parts of the control panel (101),
- receiving (1505) user input in the form of detected manipulation of said touch-sensitive display (104), and displaying results of the user input by changing states of said one or more input fields,
- forming (1506) a password message, contents of which reflect the displayed results of the user input, and
- transmitting (1507) said password message to a device, access to which is to be gained through the portable electronic device.

11. A method according to claim 10, wherein the step of utilizing said information to display (1104) an image comprises displaying an image of said control panel (101) as it appears in reality.

12. A method according to claim 10, wherein the step of utilizing said information to display (1104) an image comprises displaying control options similar to those offered by said control panel (101) but in a different graphical format.

13. A method according to claim 11 or 12, wherein the step of utilizing said information to display (1104) an image comprises additionally displaying control options (601) that are not offered by the user interface (102) of said control panel (101).

14. A method according to any of claims 11 to 13, comprising:
- displaying assistive information associated with control options of said house automation system available through the portable electronic device (103).

15. A method according to any of claims 10 to 14, wherein the step of wirelessly transmitting (1107) said one or more commands comprises at least one of:
- wirelessly transmitting said one or more commands to the same device from which said information was received, and
- wirelessly transmitting said one or more commands to other device of said house automation system than the device from which said information was received.

16. A method according to any of claims 10 to 14, comprising at least one of:
a) periodically receiving from a device coupled to said house automation system a transmission to ensure that the portable electronic device (103) is still within an area pertinent to functions that are controllable through said control panel (101), and
b) periodically checking from a location determination system included in or available to the portable electronic device (103) that the location of said portable electronic device (103) has not changed more than a predefined amount since said information was received and stored;
so that the steps of converting (1106) at least some of said user input into one or more commands and wirelessly transmitting (1107) said one or more commands to a controlling entity are only performed after a positive finding in at least one of steps a) or b).

17. A computer program stored on a computer-readable medium comprising machine-executable instructions that, when executed by one or more processors, cause the implementation of a method according to any of claims 10 to 16.

18. A lighting control system comprising at least one control panel (101) according to claim 1 and at least one portable electronic device (103) programmed with a computer program according to claim 17.

## Patentansprüche

1. Steuerfeld (101) für ein Hausautomatisierungssystem, wobei das Steuerfeld (101) Folgendes umfasst:
- eine konfigurierbare Anwenderschnittstelle (102),
- einen Speicher (203) zum Speichern von Informationen, die eine aktuelle Konfiguration der Anwenderschnittstelle (102) beschreiben, und
- eine drahtlose Sende-/Empfangseinheit (204); wobei
das Steuerfeld (101) konfiguriert ist, die drahtlose Sende-/Empfangseinheit (204) zu verwenden, um die Informationen, die die aktuelle Konfiguration beschreiben, als eine Antwort auf eine Abfrage (803) von einer externen Vorrichtung (103) zu senden (805), wobei
das Steuerfeld (101) ferner **gekennzeichnet ist durch**
- mehrere optische Indikatoren (1202) zum Bereitstellen einer optischen Rückmeldung einer detektierten Manipulation von Teilen des Steuerfelds (101) und
- eine Steuereinheit, die konfiguriert ist, die optischen Indikatoren (1202) zu steuern, wobei die Steuereinheit konfiguriert ist, ein Passwort zum Zugreifen auf das Hausautomatisierungssystem als eine Kombination optisch detektierbarer Zustände der optischen Indikatoren (1202) anzuzeigen.

2. Steuerfeld (101) nach Anspruch 1, wobei die konfigurierbare Anwenderschnittstelle (102) einen berührungsempfindlichen Bildschirm umfasst.

3. Steuerfeld (101) nach Anspruch 2, wobei die konfigurierbare Anwenderschnittstelle (102) zusätzlich ein austauschbares Grafikelement umfasst, um Funktionen von Teilen des berührungsempfindlichen Bildschirms zu veranschaulichen.

4. Steuerfeld (101) nach Anspruch 2, wobei die konfigurierbare Anwenderschnittstelle (102) zusätzlich eine elektronische Anzeigevorrichtung umfasst, die gemeinsam mit dem berührungsempfindlichen Bildschirm eine berührungsempfindliche Anzeigevorrichtung bildet.

5. Steuerfeld (101) nach einem der vorhergehenden Ansprüche, wobei die drahtlose Sende-/Empfangseinheit (204) eine Sende-/Empfangseinrichtung zur Nahfeldkommunikation umfasst.

6. Steuerfeld (101) nach einem der vorhergehenden Ansprüche, wobei die drahtlose Sende-/Empfangseinheit (204) eine Sende-/Empfangseinrichtung zur Kurzstreckenkommunikation umfasst.

7. Steuerfeld (101) nach Anspruch 6, das eine Anweisungsweiterleitungseinheit (303) umfasst, die konfiguriert ist, eine Anweisung, die durch die Sende-/Empfangseinrichtung zur Kurzstreckenkommunikation empfangen wird, zu einer weiteren Vorrichtung oder dem Hausautomatisierungssystem weiterzuleiten.

8. Steuerfeld (101) nach einem der vorhergehenden Ansprüche, wobei die Informationen, die die aktuelle Konfiguration beschreiben, Folgendes umfassen:
- Informationen, die eine aktuelle optische Erscheinungsform der konfigurierbaren Anwenderschnittstelle (102) beschreiben, und/oder
- Informationen, die Hausautomatisierungsfunktionen, die verschiedenen Teilen der konfigurierbaren Anwenderschnittstelle (102) zugeordnet und durch sie steuerbar sind, beschreiben.

9. Steuerfeld (101) nach einem der vorhergehenden Ansprüche, wobei das Steuerfeld ein Steuerfeld einer Innenbeleuchtung und/oder einer Außenbeleuchtung ist.

10. Verfahren zum Steuern eines Hausautomatisierungssystems mit einer tragbaren elektronischen Vorrichtung, wobei das Verfahren Folgendes umfasst:
- drahtloses Empfangen und Speichern (1102) von Informationen, die eine aktuelle Konfiguration der Anwenderschnittstelle (102) eines Steuerfelds (101) beschreiben,
- Verwenden der Informationen, um auf einer berührungsempfindlichen Anzeigevorrichtung (104) ein Bild anzuzeigen (1104), das Steuerfunktionen veranschaulicht, die über das Steuerfeld (101) zugänglich sind,
- Empfangen einer Anwendereingabe in Form einer detektierten Manipulation der berührungsempfindlichen Anzeigevorrichtung (104),
- Umsetzen (1106) mindestens eines Teils der Anwendereingabe in eine oder mehrere Anweisungen zum Steuern des Hausautomatisierungssystems und
- drahtloses Senden (1107) der einen oder der mehreren Anweisungen zu einer Steuereinheit (1001) des Hausautomatisierungssystems, wobei
das Verfahren ferner **gekennzeichnet ist durch** das Austauschen von Zugriffsinformationen zwischen der tragbaren elektronischen Vorrichtung und dem Steuerfeld (101), das Folgendes umfasst:
- Anzeigen (1504) auf der berührungsempfindlichen Anzeigevorrichtung (104) eines oder mehrerer Eingabefelder, die einem Anwender der tragbaren elektronischen Vorrichtung ermöglichen, Auswahlen einzugeben, die optisch detektierbare Zustände optischer Indikatoren (1202), die das Steuerfeld (101) gemäß seiner Konfiguration zum Bereitstellen einer optischen Rückmeldung einer detektierten Manipulation von Teilen des Steuerfelds (101) verwendet, nachahmen,
- Empfangen (1505) einer Anwendereingabe in Form einer detektierten Manipulation der berührungsempfindlichen Anzeigevorrichtung (104) und Anzeigen von Ergebnissen der Anwendereingabe durch Ändern von Zuständen des einen oder der mehreren Eingabefelder,
- Bilden (1506) einer Passwortnachricht, deren Inhalte die angezeigten Ergebnisse der Anwendereingabe widerspiegeln, und
- Senden (1507) der Passwortnachricht zu einer Vorrichtung, auf die durch die tragbare elektronische Vorrichtung Zugriff erlangt werden soll.

11. Verfahren nach Anspruch 10, wobei der Schritt des Verwendens der Informationen, um ein Bild anzuzeigen (1104), ein Anzeigen eines Bilds des Steuerfelds (101), wie es in Wirklichkeit erscheint, umfasst.

12. Verfahren nach Anspruch 10, wobei der Schritt des Verwendens der Informationen, um ein Bild anzuzeigen (1104), ein Anzeigen von Steuermöglichkeiten, die ähnlich zu denen, die durch das Steuerfeld (101) angeboten werden, jedoch in einem verschiedenen Grafikformat sind, umfasst.

13. Verfahren nach Anspruch 11 oder 12, wobei der Schritt des Verwendens der Informationen, um ein Bild anzuzeigen (1104), ein zusätzliches Anzeigen von Steuermöglichkeiten (601), die durch die Anwenderschnittstelle (102) des Steuerfelds (101) nicht angeboten werden, umfasst.

14. Verfahren nach einem der Ansprüche 11 bis 13, das Folgendes umfasst:
- Anzeigen von Unterstützungsinformationen, die Steuermöglichkeiten des Hausautomatisierungssystems, die über die tragbare elektronische Vorrichtung (103) verfügbar sind, zugeordnet sind.

15. Verfahren nach einem der Ansprüche 10 bis 14, wobei der Schritt des drahtlosen Sendens (1107) der einen oder der mehreren Anweisungen Folgendes umfasst:
- drahtloses Senden der einen oder der mehreren Anweisungen zu derselben Vorrichtung, von der die Informationen empfangen wurden, und/oder
- drahtloses Senden der einen oder der mehreren Anweisungen zu einer Vorrichtung des Hausautomatisierungssystems außer der Vorrichtung, von der die Informationen empfangen wurden.

16. Verfahren nach einem der Ansprüche 10 bis 14, das Folgendes umfasst:
a) regelmäßiges Empfangen von einer Vorrichtung, die an das Hausautomatisierungssystem gekoppelt ist, einer Übertragung, um sicherzustellen, dass die tragbare elektronische Vorrichtung (103) sich immer noch in einem Bereich befindet, der zu Funktionen passt, die über das Steuerfeld (101) steuerbar sind, und/oder
b) regelmäßiges Prüfen von einem Standortbestimmungssystem, das in der tragbaren elektronischen Vorrichtung (103) enthalten oder für sie verfügbar ist, dass der Standort der tragbaren elektronischen Vorrichtung (103) sich nicht mehr als um einen vorgegebenen Betrag geändert hat, seit die Informationen empfangen und gespeichert wurden;
derart, dass die Schritte des Umsetzens (1106) mindestens eines Teils der Anwendereingabe in eine oder mehrere Anweisungen und des drahtlosen Sendens (1107) der einen oder der mehreren Anweisungen zu einer Steuereinheit lediglich nach einer positiven Feststellung in Schritt a) und/oder Schritt b) durchgeführt werden.

17. Computerprogramm, das in einem computerlesbaren Medium gespeichert ist und maschinenlesbare Anweisungen umfasst, die, wenn sie durch einen oder mehrere Prozessoren ausgeführt werden, die Implementierung eines Verfahrens nach einem der Ansprüche 10 bis 16 bewirken.

18. Beleuchtungssteuersystem, das mindestens ein Steuerfeld (101) nach Anspruch 1 und mindestens eine tragbare elektronische Vorrichtung (103), die mit einem Computerprogramm nach Anspruch 17 programmiert ist, enthält.

## Revendications

1. Panneau de commande (101) pour système de domotique, le panneau de commande (101) comprenant :
- une interface utilisateur configurable (102),
- une mémoire (203) pour mémoriser des informations décrivant une configuration courante de l'interface utilisateur (102), et
- une unité d'émetteur-récepteur sans fil (204) ; dans lequel ledit panneau de commande (101) est configuré pour utiliser ladite unité d'émetteur-récepteur sans fil (204) pour transmettre (805) lesdites informations décrivant ladite configuration courante en réponse à une interrogation (803) en provenance d'un dispositif externe (103),
**caractérisé en ce que** le panneau de commande (101) comprend en outre
- une pluralité d'indicateurs visuels (1202) destinés à fournir un retour d'information visuel d'une manipulation détectée de parties du panneau de commande (101), et
- une unité de commande configurée pour commander lesdits indicateurs visuels (1202),
dans lequel ladite unité de commande est configurée pour afficher un mot de passe permettant d'accéder audit système de domotique en tant que combinaison d'états visuellement détectables desdits indicateurs visuels (1202).

2. Panneau de commande (101) selon la revendication 1, dans lequel ladite interface utilisateur configurable (102) comprend un écran tactile.

3. Panneau de commande (101) selon la revendication 2, dans lequel ladite interface utilisateur configurable (102) comprend en outre un élément graphique interchangeable pour illustrer des fonctions de parties de l'écran tactile.

4. Panneau de commande (101) selon la revendication 2, dans lequel ladite interface utilisateur configurable (102) comprend de plus un afficheur électronique qui avec ledit écran tactile constitue un afficheur tactile.

5. Panneau de commande (101) selon l'une quelconque des revendications précédentes, dans lequel ladite unité d'émetteur-récepteur sans fil (204) comprend un émetteur-récepteur de communications en champ proche.

6. Panneau de commande (101) selon l'une quelconque des revendications précédentes, dans lequel ladite unité d'émetteur-récepteur sans fil (204) comprend un émetteur-récepteur de communications à courte portée.

7. Panneau de commande (101) selon la revendication 6, comprenant une unité de transfert de commande (303) configurée pour transférer une commande reçue par ledit émetteur-récepteur de communications à courte portée à un autre dispositif ou au système de domotique.

8. Panneau de commande (101) selon une quelconque des revendications précédentes, dans lequel lesdites informations décrivant ladite configuration courante comprennent au moins une :
- d'informations décrivant un aspect visuel courant de ladite interface utilisateur configurable (102), et
- d'informations décrivant des fonctions domotiques associées à, ou pouvant être commandées par le biais de, diverses parties de ladite interface utilisateur configurable (102).

9. Panneau de commande (101) selon l'une quelconque des revendications précédentes, dans lequel le panneau de commande est un panneau de commande d'au moins un d'un éclairage intérieur et d'un éclairage extérieur.

10. Procédé de commande d'un système de domotique avec un dispositif électronique portable, le procédé comprenant :
- la réception en mode sans fil et la mémorisation (1102) d'informations décrivant une configuration courante de l'interface utilisateur (102) d'un panneau de commande (101),
- l'utilisation desdites informations pour afficher (1104), sur un afficheur tactile (104), une image illustrant des fonctions de commande qui sont accessibles par le biais dudit panneau de commande (101),
- la réception d'une entrée d'utilisateur sous forme de manipulation détectée dudit afficheur tactile (104),
- la conversion (1106) d'au moins une partie de ladite entrée d'utilisateur en une ou plusieurs commandes pour commander ledit système de domotique, et
- la transmission en mode sans fil (1107) desdites une ou plusieurs commandes à une entité de commande (1001) dudit système de domotique **caractérisé en ce que** le procédé comprend en outre l'échange d'informations d'accès entre le dispositif électronique portable et le panneau de commande (101), comprenant :
- l'affichage (1504), sur l'afficheur tactile (104), d'un ou plusieurs champs d'entrée permettant à un utilisateur du dispositif électronique portable d'entrer des sélections imitant des états visuellement détectables d'indicateurs visuels (1202) que le panneau de commande (101) de par sa configuration utilise pour fournir un retour d'information visuel d'une manipulation détectée de parties du panneau de commande (101),
- la réception (1505) une entrée d'utilisateur sous forme de manipulation détectée dudit afficheur tactile (104), et l'affichage de résultats de l'entrée d'utilisateur en changeant des états desdits un ou plusieurs champs d'entrée,
- la formation (1506) d'un message de mot de passe, dont le contenu reflète les résultats affichés de l'entrée d'utilisateur, et
- la transmission (1507) dudit message de mot de passe à un dispositif, dont l'accès doit être obtenu par le biais du dispositif électronique portable.

11. Procédé selon la revendication 10, dans lequel l'état d'utilisation desdites informations pour afficher (1104) une image comprend l'affichage d'une image dudit panneau de commande (101) tel qu'il apparaît en réalité.

12. Procédé selon la revendication 10, dans lequel l'état d'utilisation desdites informations pour afficher (1104) une image comprend l'affichage d'options de commande semblables à celles offertes par ledit panneau de commande (101) mais dans un format graphique différent.

13. Procédé selon la revendication 11 ou 12, dans lequel l'état d'utilisation desdites informations pour afficher (1104) une image comprend l'affichage supplémentaire d'options de commande (601) qui ne sont pas offertes par l'interface utilisateur (102) dudit panneau de commande (101) .

14. Procédé selon l'une quelconque des revendications 11 à 13, comprenant :
- l'affichage d'informations d'assistance associées à des options de commande dudit système de domotique disponible par le biais du dispositif électronique portable (103).

15. Procédé selon l'une quelconque des revendications 10 à 14, dans lequel l'étape de transmission sans fil (1107) desdites une ou plusieurs commandes comprend au moins une de
- la transmission en mode sans fil desdites une ou plusieurs commandes au même dispositif en provenance duquel lesdites informations ont été reçues, et
- la transmission en mode sans fil desdites une ou plusieurs commandes à un dispositif dudit système de domotique autre que le dispositif en provenance duquel les informations ont été reçues.

16. Procédé selon l'une quelconque des revendications 10 à 14, comprenant au moins une de :
a) la réception périodique en provenance d'un dispositif couplé audit système de domotique d'une transmission pour garantir que le dispositif électronique portable (103) séjourne toujours dans une zone pertinente pour les fonctions qui peuvent être commandées par le biais dudit panneau de commande (101), et
b) la vérification périodique par un système de détermination de position inclus dans le dispositif électronique portable (103) ou à la disposition de celui-ci que la position dudit dispositif électronique portable (103) n'a pas changé par plus d'une quantité prédéfinie depuis que lesdites informations ont été reçues et mémorisées ;
de telle sorte que les étapes de conversion (1106) d'au moins une partie de ladite entrée d'utilisateur en une ou plusieurs commandes et de transmission en mode sans fil (1107) ne soient réalisées qu'après un résultat positif dans au moins l'une des étapes a) ou b).

17. Programme informatique mémorisé sur un support lisible par ordinateur comprenant des instructions exécutables par machine qui, à leur exécution par un ou plusieurs processeurs, amènent la mise en œuvre d'un procédé selon l'une quelconque des revendications 10 à 16.

18. Système de commande d'éclairage comprenant au moins un panneau de commande (101) selon la revendication 1, et au moins un dispositif électronique portable (103) programme avec un programme informatique selon la revendication 17.
